# EUROPÄISCHE PATENTSCHRIFT

(11) **EP 4 204 174 B1**
(45) Veröffentlichungstag und Bekanntmachung des Hinweises auf die Patenterteilung: **16.07.2025**
(21) Anmeldenummer: 21787388.4
(22) Anmeldetag: 05.10.2021
(51) Int. Cl.: B23D 49/16, B23D 59/00, B25F 5/02

(54) **TRAGBARE HAND-SÄGEMASCHINE MIT EINER ABSAUGVORRICHTUNG**
PORTABLE HAND SAWING MACHINE WITH A SUCTION DEVICE
SCIE MANUELLE PORTABLE POURVUE D'UN DISPOSITIF D'ASPIRATION

(30) Priorität: 28.10.2020 DE 102020128371; 04.12.2020 DE 102020132285
(43) Veröffentlichungstag der Anmeldung: 05.07.2023
(73) Patentinhaber: Festool GmbH, 73240 Wendlingen am Neckar (DE)
(72) Erfinder: KÖNIG, Andreas, 70771 Leinfelden-Echterdingen (DE)
(74) Vertreter: Patentanwälte Bregenzer und Reule Partnerschaftsgesellschaft mbB
(86) Internationale Anmeldenummer: PCT/EP2021/077412
(87) Internationale Veröffentlichungsnummer: WO 2022/089890

(56) Entgegenhaltungen:
- EP-A1- 3 715 032
- EP-A2- 0 347 631
- DE-A1- 102013 226 082

## Beschreibung

Die Erfindung betrifft eine tragbare Hand-Sägemaschine, die eine Säbelsäge ist und eine Absaugvorrichtung aufweist.

EP 3 715 032 A1 offenbart eine Säbelsäge mit einem Gehäuse und einem Sägeblatt sowie einem einen Fuß, der vom Gehäuse absteht, und eine Abdeckung, die den Fuß umgibt und dazu dient, Staub in einen Einlasskanal zu leiten.

Eine aus DE 10 2018 102 855 A1 bekannte Absaugvorrichtung wird beispielsweise am Maschinengehäuse befestigt, sodass beim Sägen in das Werkstück, beispielsweise Dämmstoff, entstehende Partikel direkt durch den Absauganschluss absaugbar sind. Die Partikel gelangen durch den Führungskörper hindurch in Richtung der Absaugvorrichtung.

Die bekannte Absaugvorrichtung ist vorzugsweise dauerhaft an dem Maschinengehäuse befestigt, auch wenn sie grundsätzlich davon entfernbar ist.

Weitere Absaugvorrichtungen sind in US 2013/0055577 A1, EP 0 347 631 A2, DE 10 2013 226 082 A1, EP 2 567 964 A1 und US 2011/0083330 A1 erläutert.

Es ist daher die Aufgabe der vorliegenden Erfindung, eine verbesserte Hand-Sägemaschine mit einer Absaugvorrichtung bereitzustellen.

Zur Lösung der Aufgabe ist Hand-Sägemaschine mit einer Absaugvorrichtung gemäß der technischen Lehre des Anspruchs 1 vorgesehen.

Ein Vorteil ergibt sich beispielsweise darin, dass die Führungskontur optimal an die jeweilige Führungsaufgabe angepasst ist. So können beispielsweise für unterschiedliche Führungsaufgaben unterschiedliche Absaugvorrichtungen vorgesehen sein. Wenn die Führungskontur verschlissen ist, kann sie leicht ausgetauscht werden, beispielsweise indem die gesamte Absaugvorrichtung ersetzt wird. Ferner ist die Montage und Demontage der Absaugvorrichtung erleichtert. Die Absaugvorrichtung kann frontal an den Maschinen-Führungskörper angesteckt oder in anderer Weise montiert werden. Die Absaugvorrichtung muss nicht beispielweise in einen Zwischenraum zwischen Führungskörper und Maschinengehäuse eingebracht werden.

Weiterhin ist die Montage der Absaugvorrichtung dadurch erleichtert, dass sie nicht oder jedenfalls nicht vollständig hinter der Maschinen-Führungsfläche, z.B. in einem Zwischenraum zwischen Maschinengehäuse und Maschinen-Führungskörper zu montieren ist, sondern ganz oder zumindest partiell frontal an der Maschinen-Führungsfläche montierbar ist.

Vorteilhaft ist es, wenn ein Absaugkanal oder Strömungskanal der Absaugvorrichtung, der einerseits mit dem Absauganschluss und andererseits mit einem Ort, an dem das Sägewerkzeug bei an der Hand-Sägemaschine montierter Absaugvorrichtung angeordnet ist, neben oder an der Maschinen-Führungsfläche verläuft. Dies kann zu einer verbesserten Absaugung beitragen.

Eine vorteilhafte Maßnahme sieht vor, dass die Absaugvorrichtung einen Strömungskanal aufweist, der sich zwischen einem Aufnahmebereich für das Sägewerkzeug und dem Absauganschluss erstreckt, wobei der Strömungskanal an der Maschinen-Führungsfläche entlang und/oder an einer von dem Maschinengehäuse abgewandten Seite des Maschinen-Führungskörpers verläuft, wenn die Absaugvorrichtung an der Hand-Sägemaschine befestigt ist.

Die Absaugvorrichtung kann beispielsweise in der Art eines Schuhs ausgestaltet sein.

Der Maschinen-Führungskörper ist beispielsweise als eine Art Schlitten zum Führen entlang des Werkstücks oder einer Werkstückoberfläche des Werkstücks ausgestaltet.

Die Maschinen-Führungsfläche und/oder die Führungskontur der Absaugvorrichtung ist beispielsweise eine Gleitfläche oder umfasst eine Gleitfläche. Die Maschinen-Führungsfläche und/oder die Führungskontur ist oder umfasst vorzugsweise eine Planfläche oder ebene Fläche.

Die Maschinen-Führungsfläche und/oder die Absaugvorrichtung kann beispielsweise eine Aussparung, insbesondere eine gabelförmige und/oder V-förmige oder U-förmige Aussparung, aufweisen, in der das Sägewerkzeug aufgenommen ist und/oder die zur Aufnahme des Sägewerkzeugs vorgesehen ist.

Die Maschinen-Führungsfläche erstreckt sich beispielsweise quer zur Bewegungsachse der Werkzeugaufnahme und/oder quer zur Längsachse des Sägewerkzeugs.

Vorteilhaft ist vorgesehen, dass die Absaugvorrichtung, insbesondere die mindestens eine Führungskontur, die Maschinen-Führungsfläche zumindest partiell überdeckt oder nur partiell überdeckt. Mithin ist es also möglich, dass die Maschinen-Führungsfläche von der Absaugvorrichtung ganz oder teilweise überdeckt ist.

Es kann z.B. vorgesehen sein, dass ein Teilabschnitt der Maschinen-Führungsfläche vor die Absaugvorrichtung, insbesondere seitlich vorsteht und/oder insbesondere vor die mindestens eine Führungskontur vorsteht, wenn die Absaugvorrichtung an der Hand-Sägemaschine montiert ist. Dieser Teilabschnitt der Maschinen-Führungsfläche ist beispielsweise in Arbeitsrichtung hinten und wird beispielsweise zur Führung der Hand-Sägemaschine an dem Werkstück nicht gebraucht. Der Teilabschnitt der Maschinen-Führungsfläche steht beispielsweise an einer zu dem Absauganschluss entgegengesetzten Seite vor die Absaugvorrichtung vor.

Vorteilhaft ist weiterhin vorgesehen, dass die mindestens eine Führungskontur vor den Maschinen-Führungskörper vorsteht, insbesondere an einer dem Absauganschluss zugewandten Seite.

Vorteilhaft weist die Absaugvorrichtung eine Stützpartie zur Abstützung an der Maschinen-Führungsfläche auf. Die Stützpartie umfasst beispielsweise Stützflächen, die der Maschinen-Führungsfläche gegenüberliegen und die zur Abstützung der Maschinen-Führungsfläche vorgesehen und/oder ausgestaltet sind. Die Stützflächen sind beispielsweise Planflächen oder weisen Planflächenabschnitte auf.

Der Absauganschluss ist vorzugsweise neben der Stützpartie angeordnet. Beispielsweise kann der Absauganschluss in Arbeitsrichtung hinten angeordnet sein, wenn die Absaugvorrichtung an der Hand-Sägemaschine befestigt ist. Dadurch ist beispielsweise eine Sicht des Bedieners auf einen Arbeitsort bzw. auf eine Stelle des Einschnittes des Sägewerkzeugs in das Werkstück nicht durch den Absauganschluss oder einen daran angeordneten Saugschlauch beeinträchtigt.

Bevorzugt ist die Absaugvorrichtung derart ausgestaltet, dass der Absauganschluss in Richtung einer Unterseite des Maschinengehäuses der Hand-Sägemaschine orientiert ist, wenn die Absaugvorrichtung an der Hand-Sägemaschine befestigt ist.

Bevorzugt hat die Absaugvorrichtung eine Aussparung für das Sägewerkzeug, beispielweise eine U-förmige, V-förmige Aussparung, einen Schlitz oder dergleichen.

Der Absauganschluss und die Aussparung für das Sägewerkzeug sind vorzugsweise an einander entgegengesetzten Endbereichen oder Längsendbereichen der Absaugvorrichtung angeordnet.

Die Führungskontur der Absaugvorrichtung erstreckt sich vorteilhaft über den Bereich der Stützpartie.

Vorteilhaft erstreckt sich die Führungskontur in den Bereich des Absauganschlusses und/oder über den gesamten Bereich des Absauganschlusses.

Vorzugsweise erstreckt sich die Führungskontur über einen gesamten von dem Maschinengehäuse der Hand-Sägemaschine abgewandten Bereich der Absaugvorrichtung, wenn diese an der Hand-Sägemaschine montiert ist.

Die Stützpartie ist vorzugsweise zur Aufnahme eines Teils der Maschinen-Führungsfläche derart ausgestaltet, dass ein anderer Teil der Maschinen-Führungsfläche vor die Absaugvorrichtung vorsteht. Eine Länge der Stützpartie bezüglich einer Arbeitsrichtung, entlang derer mit der Hand-Sägemaschine Sägeschnitte in ein Werkstück einbringbar sind, ist vorzugsweise kürzer als eine Länge der Maschinen-Führungsfläche in Bezug auf diese Arbeitsrichtung.

Die Werkzeugaufnahme der Hand-Sägemaschine ist vorzugsweise zwischen dem Maschinengehäuse und dem Führungskörper angeordnet. Die Werkzeugaufnahme ist vorzugsweise in einem zu einem Werkzeugwechsel des Sägewerkzeugs frei zugänglichen Aufnahmeraum oder Zwischenraum zwischen dem Führungskörper und dem Maschinengehäuse vorgesehen.

Vorteilhaft ist es, wenn die Absaugvorrichtung sich nicht bis in den oder einen Zwischenraum oder Aufnahmeraum zwischen dem Maschinen-Führungskörper und dem Maschinengehäuse hinein erstreckt und/oder nicht in diesen Zwischenraum oder Aufnahmeraum eingreift, wenn die Absaugvorrichtung an der Hand-Sägemaschine montiert ist.

Eine zweckmäßige Maßnahme sieht weiterhin vor, dass die Absaugvorrichtung abgesehen von einer den Maschinen-Führungskörper formschlüssig aufnehmenden Partie nicht in den oder einen Zwischenraum oder Aufnahmeraum zwischen dem Maschinen-Führungskörper und dem Maschinengehäuse eingreift.

Vorteilhaft ist vorgesehen, dass die Befestigungsmittel der Absaugvorrichtung ausschließlich zur Befestigung an dem Maschinen-Führungskörper vorgesehen und/oder ausgestaltet sind. Die Befestigungsmittel umfassen also nur Bestandteile, die zur Befestigung an dem Maschinen-Führungskörper vorgesehen sind.

Die Absaugvorrichtung weist vorteilhaft keine Befestigungsmittel zur Befestigung an dem Maschinengehäuse der Hand-Sägemaschine und/oder keine Partie auf, die im an der Hand-Sägemaschine montierten Zustand der Absaugvorrichtung in einen Zwischenraum zwischen dem Maschinen-Führungskörper und dem Maschinengehäuse eingreift.

Vorteilhaft weisen die Befestigungsmittel Formschlusshaltemittel, insbesondere mindestens einen Formschlussvorsprung und/oder mindestens eine Formschlussaufnahme, zu einem formschlüssigen Halt an dem Maschinen-Führungskörper auf. Besonders bevorzugt weisen die Befestigungsmittel mindestens einen Formschlussvorsprung zu einem formschlüssigen Eingriff in den Maschinen-Führungskörper, insbesondere eine Steckaufnahme des Maschinen-Führungskörpers, und/oder eine Formschlussaufnahme zu einer formschlüssigen Aufnahme des Maschinen-Führungskörpers, insbesondere eines Steckvorsprungs des Maschinen-Führungskörpers auf.

Die Befestigungsmittel weisen vorteilhaft Rastmittel zum Verrasten der Absaugvorrichtung an dem Maschinen-Führungskörper auf. Die Rastmittel können beispielsweise Rastaufnahmen, Rasthaken, Rastvorsprünge oder dergleichen umfassen.

Alternativ oder ergänzend zu den Rastmitteln können aber auch beispielsweise magnetische Haltemittel vorgesehen sein, d. h. beispielsweise ein Magnet oder dergleichen, der an der Absaugvorrichtung vorgesehen ist und magnetischen Halt an dem Führungskörper der Hand-Sägemaschine ermöglicht.

Bevorzugt ist es, wenn die Formschlusshaltemittel und/oder die Rastmittel und/oder die magnetische Haltemittel an einer Stützpartie der Absaugvorrichtung angeordnet sind, an der die Maschinen-Führungsfläche des Maschinen-Führungskörpers abgestützt oder abstützbar ist. Die Formschlusshaltemittel und/oder die Rastmittel und/oder die magnetischen Haltemittel dienen also zum Halt unmittelbar an der Maschinen-Führungsfläche. So ist beispielsweise eine Formschluss-Gegenkontur für die Formschlusshaltemittel unmittelbar an der Maschinen-Führungsfläche, beispielsweise als eine Vertiefung, ein Vorsprung oder dergleichen, an der Maschinen-Führungsfläche, vorgesehen und ausgestaltet. Es können beispielsweise die Maschinen-Führungsfläche selbst oder eine an der Maschinen-Führungsfläche angeordnete Rast-Gegenkontur zum Verrasten der Rastmittel und/oder zu magnetischen Halt der magnetischen Haltemittel vorgesehen sein. Diese vorgenannten Rastmittel oder Haltemittel greifen also nicht an einem Randbereich der Maschinen-Führungsfläche an, sondern in einem Kernbereich der Maschinen-Führungsfläche. Beispielsweise sind an der Maschinen-Führungsfläche Rastaufnahmen oder Steckaufnahmen vorgesehen.

Vorteilhaft ist es, wenn die Befestigungsmittel mindestens eine Steckaufnahme zum Einstecken des Maschinen-Führungskörpers und/oder mindestens einen Steckvorsprung zum Einstecken in eine Maschinen-Steckaufnahme entlang einer Steckbahn und/oder einer Steckachse aufweisen. Die bereits erwähnte Stützpartie ist vorzugsweise im Bereich der mindestens einen Steckaufnahme vorgesehen und/oder erstreckt sich neben der Steckaufnahme. In die Steckaufnahme ist vorzugsweise mindestens ein Teil der Maschinen-Führungsfläche einsteckbar.

Vorteilhaft weist die Absaugvorrichtung nebeneinander angeordnete erste und zweite Steckaufnahmen auf, in die der Maschinen-Führungskörper sequenziell einsteckbar ist, d. h. zunächst in die erste und dann in die zweite Steckaufnahme einsteckbar ist, wobei der Maschinen-Führungskörper zumindest partiell bereits in die zweite Steckaufnahme eingreifen kann, wenn er in die erste Steckaufnahme eingesteckt wird. Wenn der Maschinen-Führungskörper in die erste Steckaufnahme vollständig eingesteckt ist, ist er in die zweite Steckaufnahme vollständig einsteckbar.

Eine Kombination beider Maßnahmen ist ohne weiteres möglich. So kann beispielsweise eine Partie des Führungskörpers in die Steckaufnahme der Befestigungsmittel bzw. der Absaugvorrichtung einsteckbar sein, bildet also sozusagen einen Führungskörper-Steckvorsprung. Die Absaugvorrichtung ihrerseits kann mindestens einen Steckvorsprung aufweisen, die beispielsweise dann, wenn der Führungskörper in die Absaugvorrichtung-Steckaufnahme eingesteckt ist, in eine Maschinen-Steckaufnahme einsteckbar ist. Die mindestens eine Maschinen-Steckaufnahme ist vorzugsweise an der Maschinen-Führungsfläche angeordnet. Insbesondere vorteilhaft ist es, wenn neben einer Aussparung für das Sägewerkzeug jeweils eine Maschinen-Steckaufnahme vorgesehen ist.

Vorteilhaft ist es ferner, wenn die Steckaufnahme der Absaugvorrichtung zur Aufnahme einer Randpartie des Maschinen-Führungskörpers ausgestaltet, wobei die Randpartie einen Teil der Maschinen-Führungsfläche sowie eine zu der Maschinen-Führungsfläche winkelige Stirnseite des Maschinen-Führungskörpers aufweist. So kann beispielsweise eine von der Werkzeugaufnahme der Hand-Sägemaschine abgewandte Partie des Maschinen-Führungskörpers zum Einstecken in die Steckaufnahme der Absaugvorrichtung vorgesehen sein.

Die Steckaufnahme der Absaugvorrichtung ist vorzugsweise in der Art einer Aufnahmetasche ausgestaltet. In diese Aufnahmeteile kann beispielsweise die Randpartie des Maschinen-Führungskörpers einsteckbar sein.

Der Maschinen-Führungskörper weist also vorzugsweise mindestens eine Maschinen-Steckaufnahme, beispielsweise in der Art einer Öse, eines Langlochs oder dergleichen, auf. Wie erwähnt, befindet sich diese Maschinen-Steckaufnahme vorzugsweise an der Maschinen-Führungsfläche, insbesondere neben einer Aussparung für das Sägewerkzeug.

Eine bevorzugte Maßnahme sieht vor, dass die Befestigungsmittel Steck-Fixiermittel zum Fixieren der Absaugvorrichtung quer zu der Steckrichtung aufweisen, entlang derer der Maschinen-Führungskörper in die Steckaufnahme einsteckbar ist. Somit ist der Maschinen-Führungskörper in der Steckaufnahme gegen ein Herausziehen durch die Steck-Fixiermittel fixiert.

Die Steck-Fixiermittel umfassen beispielsweise magnetische Haltemittel, insbesondere mindestens einen Magneten, und/oder Rastmittel und/oder Rasthaken und/oder die bereits erwähnten Formschlusshaltemittel oder dergleichen.

Die Steck-Fixiermittel können beispielsweise durch einen weiteren Steckvorsprung oder eine weitere Steckaufnahme der Absaugvorrichtung gebildet sein:
Vorteilhaft ist es möglich, dass beispielsweise der Maschinen-Führungskörper in die Steckaufnahme der Absaugvorrichtung entlang einer ersten Steckbahn, z.B. Steckachse oder Steckrichtung, einsteckbar ist und der mindestens eine Steckvorsprung der Absaugvorrichtung in einer zu der ersten Steckbahn oder Steckachse winkeligen zweiten Steckbahn oder Steckrichtung, beispielsweise entlang einer bogenförmigen Bahn, in die Maschinen-Steckaufnahme einsteckbar ist. So kann beispielsweise zunächst der Maschinen-Führungskörper in die Steckaufnahme eingesteckt werden und anschließend der mindestens eine Steckvorsprung der Absaugvorrichtung entlang der zweiten Steckrichtung in Eingriff mit der Maschinen-Steckaufnahme gebracht werden.

Bevorzugt sind an der Steckaufnahme der Absaugvorrichtung und/oder an dem mindestens einen Steckvorsprung der Absaugvorrichtung Rastmittel zum Verrasten mit dem Maschinen-Führungskörper vorhanden. Es ist möglich, dass der mindestens eine Steckvorsprung der Absaugvorrichtung als ein Rasthaken ausgestaltet ist. Die Rastmittel umfassen beispielsweise Rasthaken, Rastkonturen, Rastvorsprünge oder dergleichen.

Eine Steckrichtung zum Einstecken des Maschinen-Führungskörpers in die Steckaufnahme der Absaugvorrichtung verläuft vorzugsweise von dem mindestens einen Steckvorsprung weg oder quer zu dem mindestens einen Steckvorsprung der Absaugvorrichtung. Somit taucht also beispielsweise eine Partie des Maschinen-Führungskörpers beim Einstecken in die Steckaufnahme der Absaugvorrichtung in die Steckaufnahme ein und anschließend kann der mindestens eine Steckvorsprung der Absaugvorrichtung in die Maschinen-Steckaufnahme des Maschinen-Führungskörpers eingesteckt werden.

Der Maschinen-Führungskörper weist an der Maschinen-Führungsfläche vorzugsweise eine oder mehrere Aufnahmen für die Befestigungsmittel der Absaugvorrichtung auf. Eine solche Aufnahme ist oder umfasst beispielweise eine Formschlussaufnahme und/oder eine Steckaufnahme und/oder eine Rastaufnahme. Vorzugsweise sind an Seitenschenkeln des Maschinen-Führungskörpers, die sich neben einer Aussparung für das Sägewerkzeug erstrecken, jeweils eine oder mehrere derartiger Aufnahmen vorgesehen. Beispielsweise weist die Maschinen-Führungsfläche Durchtrittsöffnungen und/oder Kavitäten als Aufnahmen für die Befestigungsmittel und/oder zum formschlüssigen Befestigen der Absaugvorrichtung im Bereich der Maschinen-Führungsfläche, auf.

Vorzugsweise weist die Absaugvorrichtung ein Paar von Steckvorsprüngen und/oder Rasthaken auf. Die Steckvorsprünge oder Rasthaken haben vorzugsweise denselben oder im Wesentlichen denselben Abstand zu der Steckaufnahme der Absaugvorrichtung, wenn eine Steckaufnahme vorgesehen ist.

Vorteilhaft weist die Absaugvorrichtung ein Paar von Steckvorsprüngen, insbesondere Rasthaken, zum Einstecken in Maschinen-Steckaufnahmen des Führungskörpers, auf, die mindestens eine Rastkontur, insbesondere einen Hakenvorsprung, zum Verrasten mit den Maschinen-Steckaufnahmen aufweisen, wobei die Rastkonturen der Steckvorsprünge durch eine Bewegung der Steckvorsprünge aufeinander zu oder voneinander weg außer Eingriff mit Rastgegenkonturen der Maschinen-Steckaufnahmen, beispielsweise deren Randbereichen, bringbar sind. Somit kann beispielsweise ein Bediener mit zwei Fingern die Steckvorsprünge ergreifen und aufeinander zu bewegen, um eine Verrastung mit den Maschinen-Steckaufnahmen aufzulösen und somit die Steckvorsprünge außer Eingriff mit den Maschinen-Steckaufnahmen zu bringen.

Bei einem Verrasten oder Entrasten der Rastmittel kann eine Kraftbeaufschlagung der Absaugvorrichtung zu deren Verformung führen, was beispielsweise die Bedienung erschwert. Die nachfolgende Maßnahme kann dazu beitragen, die Bedienung zu erleichtern:
Vorteilhaft ist vorgesehen, dass die Befestigungsmittel einen Rastkörper, insbesondere einen Rasthaken, zum Verrasten mit dem Maschinen-Führungskörper und mindestens einen Stützkörper, insbesondere einen Steckvorsprung oder eine Steckaufnahme, zum Abstützen und/oder formschlüssigen Fixieren der Absaugvorrichtung an dem Maschinen-Führungskörper bezüglich einer Lösebewegung zum Lösen des Rastkörpers aus einem Rasteingriff mit dem Maschinen-Führungskörper und/oder einer Fixierbewegung des Rastkörpers zum Verrasten der Absaugvorrichtung mit dem Maschinen-Führungskörper aufweisen. Der Rastkörper weist eine Rastkontur, beispielsweise einen Hakenvorsprung, zum Verrasten mit dem Maschinen-Führungskörper auf, die durch eine Lösebewegung außer Eingriff mit dem Maschinen-Führungskörper bringbar ist. Der Stützkörper wirkt beispielsweise einer Verformung eines Grundkörpers der Absaugvorrichtung bei der Betätigung des Rastkörpers entgegen.

Eine vorteilhafte Maßnahme sieht vor, dass der Rastkörper und der mindestens eine Stützkörper unmittelbar nebeneinander angeordnet sind und/oder beide zu einem gemeinsamen Eingriff in eine Maschinen-Steckaufnahme des Maschinen-Führungskörpers ausgestaltet sind. Wenn der Rastkörper und der Stützkörper unmittelbar nebeneinander angeordnet sind, also beispielsweise ein Steckvorsprung und ein Rasthaken, können diese in ein und dieselbe Maschinen-Steckaufnahme eingreifen oder auch in separate Maschinen-Steckaufnahmen. Der Maschinen-Führungskörper ist dementsprechend ausgestattet, weist also eine Paarung nebeneinander angeordneter Steckaufnahmen oder eine ausreichend große Steckaufnahme und/oder ein Langloch zur Aufnahme des Rastkörpers und des Stützkörpers der Befestigungsmittel der Absaugvorrichtung auf.

Besonders bevorzugt ist es, wenn der Rastkörper zwischen zwei Stützkörpern, beispielsweise zwischen zwei Steckvorsprüngen, angeordnet ist, von denen mindestens einer zum formschlüssigen Fixieren und/oder Abstützen bei der Lösebewegung oder Fixierbewegung des Rastkörpers wirkt. Es ist möglich, dass der andere Stützkörper beispielsweise eine Verschiebesicherung bildet, die ein Entfernen des Maschinen-Führungskörpers, insbesondere dessen Randpartie, aus der Steckaufnahme der Absaugvorrichtung, blockiert oder behindert.

Die Führungskontur kann beispielsweise als eine Führungsfläche ausgestaltet sein oder eine Führungsfläche aufweisen.

Vorzugsweise weist die Absaugvorrichtung eine Aussparung für das Sägewerkzeug auf. Die Aussparung kann beispielsweise an einer als Planfläche ausgestaltet den Führungsfläche der Führungskontur vorgesehen sein.

Bevorzugt ist jedoch eine Aussparung für das Sägewerkzeug durch eine oder mehrere Seitenwände der Absaugvorrichtung begrenzt.

An dieser Stelle sei erwähnt, dass die Führungskontur beispielsweise als eine Planfläche ausgestaltet sein kann oder eine Planfläche aufweisen kann.

Bevorzugt ist jedoch die Führungskontur verhältnismäßig schmal, was insbesondere durch die nachfolgenden Maßnahmen realisiert sein kann.

Vorteilhaft ist es, wenn die Absaugvorrichtung mindestens eine Seitenwand aufweist, deren Schmalseite oder Stirnseite die Führungskontur oder ein Bestandteil der Führungskontur bildet. Vorteilhaft ist vorgesehen, dass sich die mindestens eine Seitenwand neben dem Absauganschluss und/oder in einem Bereich zwischen dem Absauganschluss und einer Aussparung der Absaugvorrichtung für das Sägewerkzeug erstreckt.

Die Seitenwand kann einen Bestandteil einer U-förmigen oder ringförmigen Seitenwand bilden oder als eine U-förmige oder ringförmige Seitenwand ausgestaltet sein. Die Seitenwand kann beispielsweise einen Strömungskanal begrenzen, durch den Partikel von dem Sägewerkzeug weg in Richtung des Absauganschlusses strömen können.

Eine bevorzugte Maßnahme sieht vor, dass die Führungskontur eine U-förmige Gestalt aufweist. Ein Grundschenkel der Führungskontur verläuft dabei vorzugsweise neben dem Absauganschluss. Seitenschenkel der Führungskontur erstrecken sich vorteilhaft in Richtung einer Aussparung für das Sägewerkzeug.

Vorteilhaft ist vorgesehen, dass die Absaugvorrichtung mindestens zwei Seitenwände mit einem Abstand zueinander aufweist, wobei der Abstand zur Aufnahme des Sägewerkzeugs oder des Sägeblatts ausgestaltet und vorgesehen ist und/oder einen Bestandteil eines zu dem Absauganschluss führenden Strömungskanals bildet. Schmalseiten der Seitenwände sind beispielsweise zur Auflage auf dem Werkstück oder zum Führen an dem Werkstück vorgesehen.

Die Absaugvorrichtung als Ganzes oder ein Teil davon besteht vorzugsweise aus Kunststoff, der auch vorzugsweise anhand von Fasern, beispielsweise anhand von Glasfasern und/oder Kohlefasern, faserverstärkt ist. Somit ist die Absaugvorrichtung günstig herstellbar und kann somit bei Verschleiß einfach ausgetauscht werden. So besteht beispielsweise auch die Führungskontur bei dieser Ausgestaltung der Absaugvorrichtung aus Kunststoff.

Beispielsweise besteht die Absaugvorrichtung zumindest teilweise oder ganz aus Polycarbonat-Acrylnitril-Butadien-Styrol-Copolymer (PC-ABS), Polyoxymethylen (POM), Polyamid, insbesondere Polyamid mit Glasfaser-Verstärkung, zum Beispiel PA6GFx, besteht, wobei x für einen prozentualen Anteil von Glasfasern steht und beispielsweise zwischen 5 und 50 liegt, insbesondere bei etwa 5-20 liegt. Beispielweise besteht der Kunststoff zu 5 % aus Glasfasern, wenn er mit PA6GF5 bezeichnet ist.

Vorteilhaft kann aber auch nur ein Grundkörper der Absaugvorrichtung aus Kunststoff bestehen, insbesondere im Zusammenhang mit der nachfolgend erläuterten Maßnahme.

Ein vorteilhaftes Konzept sieht vor, dass zumindest ein Teil der Führungskontur an einem Führungselement angeordnet ist, welches lösbar an einem Grundkörper der Absaugvorrichtung befestigt oder befestigbar ist. Das Führungselement ist beispielsweise plattenartig ausgestaltet. Es können beispielweise zwei Führungselemente vorgesehen sein, die in der Art von Kufen ausgestaltet sind.

Vorteilhaft ist weiterhin, wenn die Führungskontur als Ganzes oder zumindest ein Teil der Führungskontur an einem Führungselement angeordnet ist, welches lösbar an einem Grundkörper der Absaugvorrichtung befestigt oder befestigbar ist.

Der Absauganschluss weist beispielsweise einen Anschlusskörper, insbesondere einen Rohrkörper auf.

An dem Absauganschluss können beispielsweise Rastmittel, insbesondere Rastnocken oder dergleichen, zum Verrasten oder formschlüssigen Halten des Saugschlauches vorgesehen sein. Bevorzugt umfasst der Absauganschluss ein rohrförmiges Anschlusselement oder einen Rohrkörper.

Dieser Rohrkörper kann einen Anschlussstutzen bilden.

In einer Führungsebene, die durch die Führungskontur aufgespannt ist oder die an der Führungskontur vorgesehen ist, ist die Absaugvorrichtung im Bereich des Sägewerkzeugs an dem zu bearbeitenden Werkstück abgestützt, wenn die Absaugvorrichtung an der Hand-Sägemaschine montiert ist. Es versteht sich, dass andere Partien der Führungskontur beispielsweise gegenüber dieser Führungsebene zurückversetzt sein können, insbesondere Partien der Führungskontur im Bereich des Absauganschlusses. Vorzugsweise kann die Führungskontur eine kufenartige Gestalt haben.

Bevorzugt ist es, wenn der Absauganschluss einen Anschlusskörper, insbesondere einen Anschlussstutzen, aufweist, der zum Anstecken eines Saugschlauches ausgestaltet ist und bezüglich eines zur Verbindung mit dem Maschinen-Führungskörper vorgesehenen und ausgestalteten Grundkörpers um eine oder mehrere Drehachsen oder Schwenkachsen anhand mindestens eines Schwenklagers oder einer Schwenklageranordnung drehbar oder schwenkbar gelagert ist. Der Anschlussstutzen ist beispielsweise als ein Rohrstück ausgestaltet. Beispielweise verläuft eine Schwenkachse eines derartigen Schwenklagers vorzugsweise parallel zu einer Führungsebene, in der die Führungskontur liegt oder die durch die Führungskontur aufgespannt ist.

Vorteilhaft ist es, wenn eine Längsachse des Absauganschlusses, insbesondere eines Anschlusskörpers des Absauganschlusses, in einem Winkel schräg geneigt zu einer Führungsfläche verläuft, die durch die Führungskontur aufgespannt ist oder in der die Führungskontur angeordnet ist. Eine Längserstreckung oder Längsachse des Absauganschlusses, insbesondere eines Anschlusskörpers des Absauganschlusses, ist beispielsweise in einem Winkel zu einer Führungsfläche oder Fläche orientiert, in der sich die Führungskontur der Absaugvorrichtung befindet. Der Winkel zwischen der Längsachse oder Längserstreckung des Absauganschlusses und der Führungsfläche liegt beispielsweise in einem Bereich von ca. 15° bis 80°. Bevorzugt ist eine Neigung von ca. 20-40°. Es ist allerdings auch möglich, dass beispielsweise die Führungsfläche und die Längsachse oder Längserstreckung des Absauganschlusses einen Winkel von 90° oder fast 90° aufweisen, beispielsweise dann, wenn ein Bereich der Absaugvorrichtung, an dem der Absauganschluss angeordnet ist, ausreichend weit seitlich vor den Maschinen-Führungskörper und/oder das Maschinengehäuse vorsteht. Wenn der Anschlusskörper oder Absauganschluss bezüglich der Führungskontur ortsfest ist, ist der vorgenannte Winkel unveränderlich. Wenn ein Schwenklager vorhanden ist, kann der Winkel einstellbar sein, beispielsweise in einem Winkelbereich von 15° bis 60°. Eine solche Schwenkbarkeit ist beispielsweise mit einer Drehachse oder Schwenkachse, die parallel zur Führungsfläche verläuft, realisierbar.

Das Sägewerkzeug weist vorteilhaft eine schwertartige oder blattartige Gestalt auf. Vorteilhaft erstreckt sich der Antriebsmotor der Hand-Sägemaschine oder eine Längserstreckungsachse des Antriebsmotors parallel zu einer Längsachse des Sägewerkzeugs.

Das Maschinengehäuse der Hand-Sägemaschine hat vorteilhaft eine pistolenartige Gestalt.

Vorteilhaft ist vorgesehen, dass der Absauganschluss in Arbeitsrichtung vorn angeordnet ist, wenn die Absaugvorrichtung an der Hand-Sägemaschine befestigt ist.

Es sei erwähnt, dass die Hand-Sägemaschine vorzugsweise in einer ersten Arbeitsrichtung und einer zu der ersten Arbeitsrichtung entgegengesetzten zweiten Arbeitsrichtung nutzbar ist. Beispielsweise kann das Sägewerkzeug an einander entgegengesetzten Seiten jeweils eine Sägekontur, Zahnung oder dergleichen aufweisen, sodass in einander entgegengesetzte Arbeitsrichtung in Sägeschnitte in ein Werkstück einbringbar sind. Es ist aber auch möglich, dass das Sägewerkzeug nur an einer Seite, insbesondere Längsseite, eine Sägekontur aufweist, in einer ersten Drehwinkelstellung an der Werkzeugaufnahme der Hand-Sägemaschine befestigbar ist, um Sägeschnitte in einer ersten Arbeitsrichtung in das Werkstück einzubringen, und in einer zweiten Drehwinkelstellung, die um 180° drehwinkelversetzt ist, um Sägeschnitte in einer zweiten in das Werkstück einzubringen.

Nachfolgend werden Ausführungsbeispiele der Erfindung anhand der Zeichnung erläutert. Es zeigen:
- Figur 1: eine perspektivische Schrägansicht, einer Hand-Sägemaschine mit einer Absaugvorrichtung sowie einem Staubsauger,
- Figur 2: eine perspektivische Schrägansicht eines vorderen Teils der Hand-Sägemaschine gemäß Figur 1 mit entfernter Absaugvorrichtung,
- Figur 3: den vorderen Teil der Hand-Sägemaschine gemäß Figur 1 sowie der Absaugvorrichtung von der Seite,
- Figur 4: eine perspektivische Schrägansicht der Absaugvorrichtung,
- Figur 5: einen Schnitt durch einen Maschinen-Führungskörper der Hand-Sägemaschine sowie die Absaugvorrichtung etwa entlang einer Schnittlinie A-A in Figur 4, wobei die Absaugvorrichtung teilweise von dem Maschinen-Führungskörper weg geschwenkt ist, beispielsweise bei einer Montage oder Demontage der Absaugvorrichtung an bzw. von dem Maschinen-Führungskörper,
- Figur 6: die Ansicht gemäß Figur 5, wobei die Absaugvorrichtung mit dem Maschinen-Führungskörper verbunden ist,
- Figur 7: eine weitere Absaugvorrichtung gemäß vorstehender Figuren mit magnetischem Halt perspektivisch von schräg unten,
- Figur 8: die Absaugvorrichtung gemäß Figur 7, jedoch mit entfernten Führungselementen,
- Figur 9: eine Draufsicht auf die Absaugvorrichtung gemäß Figuren 7, 8,
- Figur 10: einen Schnitt durch die Absaugvorrichtung gemäß Figur 9, etwa entlang einer Schnittlinie B-B in Figur 9,
- Figur 11: eine weitere Absaugvorrichtung, etwa in einer Draufsicht entsprechend Figur 9,
- Figur 12: eine Seitenansicht der Absaugvorrichtung gemäß Figur 11,
- Figur 13: einen Schnitt durch die Absaugvorrichtung gemäß Figur 11, etwa entlang einer Schnittlinie D-D, und
- Figur 14: einen Schnitt durch die Absaugvorrichtung gemäß Figur 12, etwa entlang einer Schnittlinie E-E.

Bei den nachfolgend beschriebenen Ausführungsbeispielen sind gleiche Komponenten mit denselben Bezugszeichen versehen. Im Wesentlichen ähnliche oder funktional gleiche Komponenten haben Bezugsziffern, die sich um jeweils 100 unterscheiden.

Eine Hand-Sägemaschine 10 weist ein Maschinengehäuse 17 auf, in welchem ein Antriebsmotor 11 aufgenommen ist. Der Antriebsmotor 11 ist beispielsweise ein Elektromotor, der über einen elektrischen Energiespeicher 19, beispielsweise einen Akkupack, mit elektrischer Energie versorgbar ist. Alternativ wäre auch ein Netzkabel bei der Hand-Sägemaschine 10 möglich, um sie mit einem elektrischen Versorgungsnetz zu verbinden.

Der Antriebsmotor 11 ist anhand eines Schaltelements 16 einschaltbar und ausschaltbar und vorzugsweise auch hinsichtlich seiner Drehzahl einstellbar. Der Antriebsmotor 11 treibt über ein Getriebe 12 ein Abtriebselement 13 an, an dem eine Werkzeugaufnahme 14 für ein Sägewerkzeug 15 vorgesehen ist. Das Sägewerkzeug 15 ist beispielsweise ein Sägeblatt 15a, welches in die Werkzeugaufnahme 14 einsteckbar und dort verriegelbar ist.

Das Getriebe 12 ist ein Oszillationsgetriebe und wandelt eine drehende Bewegung des Antriebsmotors 11 in eine oszillierende Linearbewegung um, so dass die Werkzeugaufnahme 14 und somit auch das Sägewerkzeug 15 eine oszillierende Bewegung O entlang einer Bewegungsachse SO macht.

Das Sägewerkzeug 15 kann in einander entgegengesetzten Positionen in der Werkzeugaufnahme 14 befestigt werden, so dass die Hand-Sägemaschine 10 einmal für einen Sägebetrieb in einer Arbeitsrichtung AR1 und in einer bezüglich der Werkzeugaufnahme 14 um 180° gedrehten Position des Sägewerkzeugs 15 in einer Arbeitsrichtung AR2 betreibbar ist.

An einem von der Werkzeugaufnahme 14 abgewandten Teil des Maschinengehäuses 17 ist ein Handgriff 18 vorgesehen, der pistolenartig ausgestaltet ist, so dass das an sich eine Längsgestalt aufweisende Maschinengehäuse 17 von einem Bediener ergriffen werden kann. An dem Handgriff 18 befindet sich der Schalter 16, beispielsweise ein Druckschalter.

Die Werkzeugaufnahme 14 ist an einer Frontwand 17A des Maschinengehäuses 17 angeordnet, wobei die Frontwand 17A und der Handgriff 18 einander entgegengesetzte Endbereiche des Maschinengehäuses 17 darstellen.

Zur Führung der Handsägemaschine 10 an einem Werkstück, beispielsweise einer Wand-Oberfläche oder dergleichen, weist die Hand-Sägemaschine 10 eine Maschinen-Führungseinrichtung 20 mit einem Maschinen-Führungskörper 22 auf. Die Maschinen-Führungseinrichtung 20 ist der Werkzeugaufnahme 14 sozusagen vorgelagert und hat eine sich vor der Maschinen-Werkzeugaufnahme 14 erstreckende Maschinen-Führungsfläche 23, die zum Führen an einer Werkstückoberfläche vorgesehen ist. Die Maschinen-Führungsfläche 23 ist beispielsweise als eine Planfläche ausgestaltet.

Der Maschinen-Führungskörper 22 ist anhand einer Lagereinrichtung 21V bezüglich einer Längsachse L verschieblich an dem Maschinengehäuse 17 gelagert. Die Lagereinrichtung 21V umfasst Stützelemente 21, die sich von dem Maschinen-Führungskörper 22 weg in Richtung des Maschinengehäuses 17 erstrecken und in am Maschinengehäuse 17, insbesondere dessen Innenraum, angeordnete Verschiebeaufnahmen 21A unverschieblich aufgenommen sind. Im Bereich der Verschiebeaufnahmen 21A ist ein Fixierkörper 21C, beispielsweise ein Riegel, Rastkörper oder dergleichen, zum Eingriff in Fixieraufnahmen 21B an einem oder beiden der Stützelemente 21 vorgesehen, um den Maschinen-Führungskörper 22 in unterschiedlichen Längspositionen bezüglich der Längsachse L zu fixieren. Es können mehrere Fixieraufnahmen 21 B in Längsabständen bezüglich der Längsachse L vorgesehen sein.

Der Maschinen-Führungskörper 22 weist Seitenschenkel 27 auf, die sich von der Führungsfläche 23 weg erstrecken und/oder zur Führungsfläche 23 winkelig sind. Die Seitenschenkel 27 sind mit den Stützelementen 21 verbunden, beispielsweise mit diesen einstückig oder anhand von Bolzen oder anderen Verbindungselementen 27A verbunden.

Der Maschinen-Führungskörper 22 weist eine Randpartie 24 auf, von der sich Seitenschenkel 25 weg erstrecken, zwischen denen sich eine Aussparung 26 für das Sägewerkzeug 15 befindet. Die Randpartie 24 könnte man auch als einen Grundschenkel bezeichnen, von der sich Seitenschenkel oder Führungsschenkel 25 weg erstrecken. Insgesamt bilden die Randpartie 24 und die Seitenschenkel 25 eine U-förmige Gestalt oder eine gabelförmige Gestalt, die einen Zwischenraum in Gestalt der Aussparung 26 für das Sägewerkzeug 15 begrenzt. Die Maschinen-Führungsfläche 23 erstreckt sich sowohl im Bereich des Grundschenkels oder der Randpartie 24 als auch an den Seitenschenkeln 25. Grundsätzlich ist also die Maschinen-Führungsfläche 23 zum Führen der Hand-Sägemaschine 10 an Werkstückoberfläche vorgesehen.

Beim Arbeitsbetrieb des Sägewerkzeugs 15 fallen Späne, Partikel oder dergleichen an. Diese sind durch eine Saugvorrichtung 90 absaugbar, beispielsweise einen Staubsauger.

Die Saugvorrichtung 90 weist ein Saugergehäuse 95, eine Saugturbine 92 sowie einen Staubsammelraum 93 auf, der mit einem Saugschlauch 91 strömungsverbunden ist.

Nun kann man sich leicht vorstellen, dass es für den Bediener schwierig ist, den Saugschlauch 91 bzw. dessen Einströmöffnung in die Nähe des Arbeitsortes des Sägewerkzeugs 15 zu bringen und dort während des Sägebetriebes zu halten. Um diesem Problem abzuhelfen ist eine Absaugvorrichtung 30 vorgesehen, die mit der Hand-Sägemaschine 10 einfach verbindbar ist, wenn sie gebraucht wird, aber auch ebenso einfach wieder entfernbar ist, wenn sie nicht gebraucht wird.

Die Absaugvorrichtung 30 weist einen Absauganschluss 31 zum Anschließen des Saugschlauches 91 auf. Der Saugschlauch 91 weist an seinem vom Saugergehäuse 95 abgewandten Ende ein Anschlussstück 94 auf, welches mit dem Absauganschluss 31 verbindbar ist. Das Anschlussstück 94 kann beispielsweise auf den Absauganschluss 34 aufgesteckt oder in den Abschlaganschluss eingesteckt werden.

Der Absauganschluss 31 weist als einen Anschlusskörper 32A einen Anschlussstutzen 32 auf, beispielsweise einen Rohrkörper, der einen Durchlasskanal 34 ringförmig umschließt. Der Durchlasskanal 34 ist mit einem Absaugbereich 35 der Absaugvorrichtung 30 strömungsverbunden, wobei der Absaugbereich 35 dann, wenn die Absaugvorrichtung 30 an der Hand-Sägemaschine 10 befestigt ist, im Bereich des Sägewerkzeugs 15 bzw. der Werkzeugaufnahme 14 angeordnet ist, sodass beim Betrieb des Sägewerkzeugs 15 anfallende Späne oder dergleichen andere Partikel durch den Durchlasskanal 34 absaugbar sind.

In den Rohrkörper oder Anschlussstutzen 32 ist das Anschlussstück 94 einsteckbar oder auf diesen aufsteckbar.

An dem Anschlussstutzen 32 sind Formschlusskonturen 33, beispielsweise Rastvorsprünge, Nocken oder dergleichen, zum formschlüssigen Halten des Anschlussstücks 94 vorhanden, sodass dieses beispielsweise mit einer Steck-Drehbewegung formschlüssig mit dem Anschlussstutzen 32 verbindbar ist.

Vorteilhaft sind in den Durchlasskanal 34 hinein vorstehende Formschlusskonturen 33, die zu einem formschlüssigen Eingriff in das Anschlussstück 94 vorgesehen sind, wenn dieses in den Anschlussstutzen 32 eingesteckt ist.

Alternativ oder ergänzend können aber auch an einer von dem Durchlasskanal 34 abgewandten Außenseite des Anschlussstutzens 32 Formschlusskonturen 33 vorgesehen sein, die zum Eingriff in ein auf den Anschlussstutzen 32 aufgesteckte Anschlussstück 94 vorgesehen sind.

Die Absaugvorrichtung 30 weist einen Grundkörper 40 auf.

Die Absaugvorrichtung 30 und/oder der Grundkörper 40 umfassen eine Stützpartie 41 zur Abstützung an dem Maschinen-Führungskörper 22 sowie eine Absaugpartie 42, an der der Absauganschluss 31 vorgesehen ist. Wenn die Absaugvorrichtung 30 an der Maschinen-Führungseinrichtung 20, insbesondere dem Maschinen-Führungskörper 22, befestigt ist, steht die Absaugpartie 42 seitlich vor den Maschinen-Führungskörper 22 zumindest teilweise vor.

Der Grundkörper 40 weist Seitenwände 44 auf, die an einem Längsendbereich durch eine Bodenwand 43 und an einem anderen Längsendbereich durch Rückwand 45 miteinander verbunden sind. Die Seitenwände 44 und die Rückwand 45 sind einstückig miteinander. Die Rückwand 45 ist beispielsweise bogenförmig und erstreckt sich neben dem Anschlussstutzen 32 bzw. dessen Umfangswand.

An ihren von der Rückwand 45 abgewandten Längsendbereichen der Seitenwände 44 sind Stützschenkel 46 angeordnet, die zur Abstützung und Befestigung an dem Maschinen-Führungskörper 22 vorgesehen sind.

Im Bereich der Stützschenkel 46 oder an den Stützschenkeln 46 ist eine Aussparung 46A vorgesehen, durch die der Maschinen-Führungskörper 22 mit einer Partie seitlich vor die Absaugvorrichtung 30 vorsteht.

An den Stützschenkeln 46 sind Stützkonturen 43A vorgesehen, die mit der Bodenwand 43 fluchten und den Maschinen-Führungskörper 22 abstützen, beispielsweise an der Maschinen-Führungsfläche 23.

An der Bodenwand 43 sowie zwischen den Stützschenkeln 46 ist eine Aussparung 47 vorgesehen, in die das Sägewerkzeug 15 eingreift, wenn die Absaugvorrichtung 30 an dem Maschinen-Führungskörper 22 befestigt ist.

Die Bodenwand 43 bildet einen Bestandteil eines Grundschenkels oder einer Basis 36 der Absaugvorrichtung 30, von der Seitenschenkel 37, nämlich insbesondere die Stützschenkel 46, vorstehen. Die Stützschenkel 46 oder Seitenschenkel 37 sind den Seitenschenkeln 27 des Maschinen-Führungskörper 22 zugeordnet.

Die Seitenschenkel 37 sowie die Basis 36 überdecken im Wesentlichen die Maschinen-Führungsfläche 23 des Maschinen-Führungskörpers 22.

Ein Abschnitt der Seitenschenkel 27 steht vor die freien Endbereiche der Stützschenkel 46 oder Seitenschenkel 37 vor, der jedoch nicht zum Kontakt mit einem Werkstück vorgesehen ist. Vielmehr ist bei an der Hand-Sägemaschine 10 montierter Absaugvorrichtung 30 eine Führungskontur 55 der Absaugvorrichtung 30 zum Führen an einem Werkstück W entlang vorgesehen.

Die Führungskontur 55 weist Längsabschnitte 56 auf, die durch die Schmalseiten der Seitenwände 44 bereitgestellt sind. Die Längsabschnitte 56 erstrecken sich entlang der Seitenschenkel 37 des Maschinen-Führungskörpers 22 und/oder der Absaugvorrichtung 30. Zu den freien Endbereichen der Seitenschenkel 27 hin weist die Führungskontur 55 weiterhin Stützabschnitte 57 auf. Die Stützabschnitte 57 sowie ein die Längsabschnitte 56 verbindender Verbindungsabschnitt 58 der Führungskontur 55 sind aneinander entgegengesetzten Seiten der Längsabschnitte 56 vorgesehen. Der Verbindungsabschnitt 58 wird von einer Schmalseite der Rückwand 45 des Grundkörpers 40 bereitgestellt.

Somit begrenzt also die Führungskontur 55 einen Strömungskanal 52, der zum Absaugbereich 35 beim Absauganschluss 31 führt. Der Strömungskanal 52 verläuft somit an der Maschinen-Führungsfläche 23 vorbei oder neben der Maschinen-Führungsfläche 23 oder unmittelbar benachbart zu der Maschinen-Führungsfläche 23.

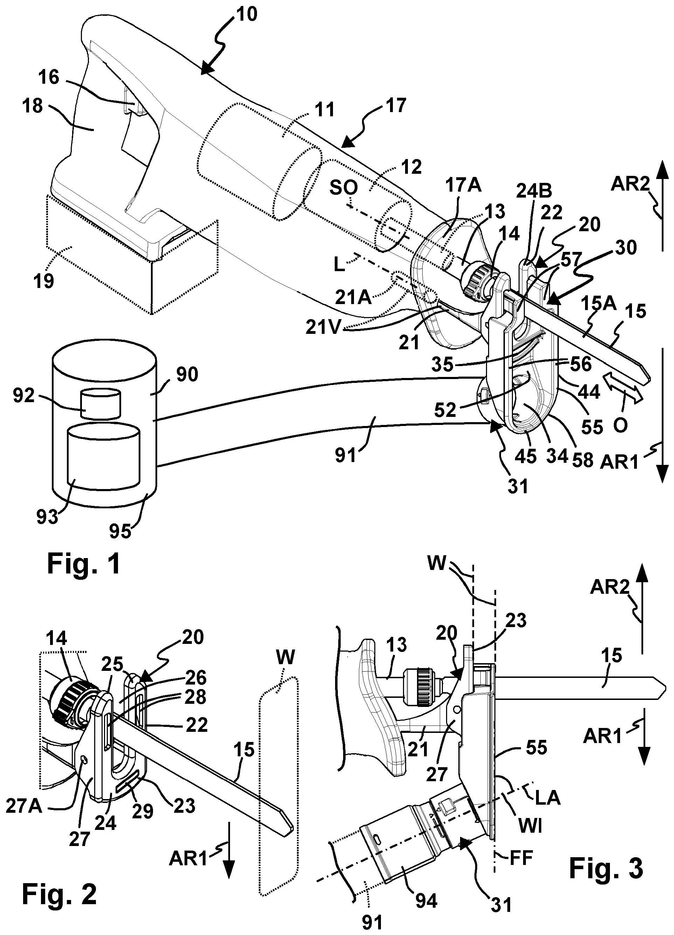

Anhand von Figur 3 wird deutlich, dass die Hand-Sägemaschine 10 bei von der Hand-Sägemaschine 10 entfernter Absaugvorrichtung 30 unmittelbar mit der Maschinen-Führungsfläche 23 an dem Werkstück W führbar ist. Wenn jedoch die Absaugvorrichtung 30 an der Hand-Sägemaschine 10 befestigt ist, dient die Führungskontur 55 zum Führen an dem Werkstück W.

Die Aussparung 47 für das Sägewerkzeug 15 wird umfangsseitig durch eine Innenwand 48 begrenzt. Die Innenwand 48 erstreckt sich bis zu einer Stirnwand 49, die an den freien Endbereichen der Seitenschenkel 37 angeordnet ist.

Zwischen den Seitenwänden 44 erstreckt sich eine Deckwand 55, die der Bodenwand 43 diagonal gegenüber liegt. Weiterhin ist eine Deckwand 51 mit der Deckwand 50 verbunden, an der der Anschlussstutzen 32 angeordnet ist.

Die Deckwände 50, 51 sind vorzugsweise winkelig zueinander, sodass der an der Deckwand 51 angeordnete Anschlussstutzen 32 eine zur Führungskontur 55 winkelige Orientierung aufweist, beispielsweise in einem Winkel von etwa 45°.

Mithin verläuft also ein Strömungskanal durch den Absauganschluss 31 hindurch nach schräg hinten in Richtung des Maschinengehäuses 17, wenn die Absaugvorrichtung 30 an der Hand-Sägemaschine 10 befestigt ist. Bevorzugt ist es, wenn der Strömungskanal nach schräg hinten bezüglich des Maschinengehäuses 17 und/oder in Richtung einer Unterseite des Maschinengehäuses 17 orientiert ist.

Zur Befestigung der Absaugvorrichtung 30 an der Hand-Sägemaschine 10, insbesondere deren Maschinen-Führungseinrichtung 20, sind Befestigungsmittel 60 vorgesehen.

Die Befestigungsmittel 60 umfassen eine Steckaufnahme 61 sowie eine neben der Steckaufnahme 61 angeordnete Steckaufnahme 62. Der Maschinen-Führungskörper 22 kann in die Steckaufnahme 61 entlang einer Steckbahn SB1 eingesteckt werden, nämlich mit seiner Randpartie 24.

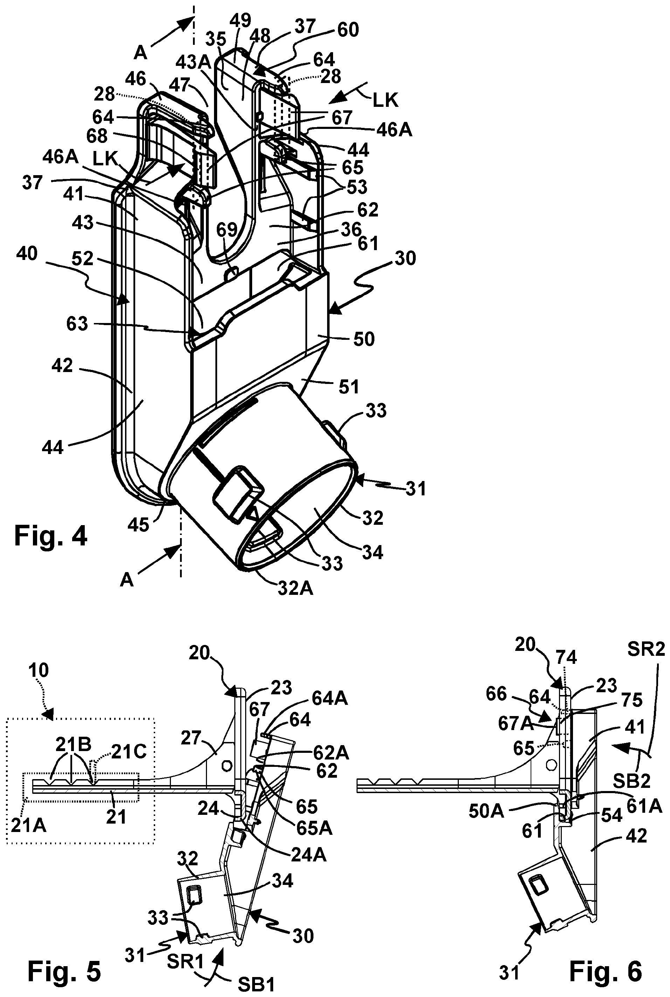

Die Steckaufnahme 61 wird durch die Seitenwände 44 sowie die Deckwand 50, insbesondere einen Abschnitt 50A der Deckwand 50, begrenzt. In der Steckaufnahme 61 ist weiterhin ein Steckanschlag 54 angeordnet, der beispielsweise mit den Seitenwänden 44 und/oder der Deckwand 50 verbunden ist. Der Abschnitt 50A der Deckwand 50 stützt sich am Maschinen-Führungskörper 22 ab, sodass die Absaugvorrichtung 30 bezüglich einer beispielsweise in Figur 6 nach rechts von unten wirkenden Kraft, die zum Beispiel durch den Saugschlauch 95 ausgeübt werden könnte, abgestützt ist.

Die Randpartie 24 des Maschinen-Führungskörpers 22 schlägt mit ihrer von der Aussparung 26 abgewandten Stirnseite 24A an dem Steckanschlag 54 an, was beispielsweise in Figur 5 und Figur 6 exemplarisch dargestellt ist. Mithin bildet also die Randpartie 24 des Maschinen-Führungskörpers 22 einen Steckvorsprung zum Einstecken in die Steckaufnahme 61.

Wenn der Maschinen-Führungskörper 22 in die Steckaufnahme 61 eingesteckt ist, wird er anschließend vollständig in die neben der Steckaufnahme 61 angeordnete Steckaufnahme 62 eingesteckt, nämlich entlang einer Steckbahn SB2. Die Steckbahn SB2 verläuft winkelig zur Steckbahn SB1, beispielsweise etwa rechtwinkelig.

Wenn der Maschinen-Führungskörper 22 in die Steckaufnahmen 61, 62 eingesteckt ist, steht eine dem Sägewerkzeug 15 zugeordnete Partie 24B des Maschinen-Führungskörpers 22 vor die Absaugvorrichtung, insbesondere die Stützschenkel 46 vor.

Während die Steckbahn SB1 einen im Wesentlichen geradlinigen oder linearen Verlauf aufweisen kann, ist die Steckbahn SB2 beispielsweise etwa bogenförmig. Mithin wird also der Maschinen-Führungskörper 22 in die Steckaufnahme 62 sozusagen eingeschwenkt, wobei der Maschinen-Führungskörper 22 mit seiner Randpartie 24 in der Steckaufnahme 61, die insoweit eine Schwenklageraufnahme bildet, geschwenkt wird.

Wenn der Maschinen-Führungskörper 22 in die Steckaufnahme 62 eingeschwenkt ist, stützt er sich mit seinen schmalen Längsseiten, die sich neben der Maschinen-Führungsfläche 23 erstrecken, an den Seitenwänden 44 ab. Dort sind vorzugsweise Stützrippen 53 zur Abstützung des Maschinen-Führungskörpers 22 vorgesehen.

Die Steckaufnahmen 61 und 62 bilden Formschlussaufnahmen 61A, 62A zum formschlüssigen Halten des Maschinen-Führungskörpers 22 als Ganzes. Mithin sind also beispielsweise die beiden Formschlussaufnahmen 61A, 62A Formschlusshaltemittel 63.

Weitere Formschlusshaltemittel 63 der Befestigungsmittel 60 sind durch Stützkörper 64 und 65 gebildet, die zum Eingriff in Maschinen-Steckaufnahmen 28 am Maschinen-Führungskörper 22 vorgesehen sind.

Die Maschinen-Steckaufnahmen 28 befinden sich an den Seitenschenkeln 27 und sind unmittelbar an der Maschinen-Führungsfläche 23 angeordnet. Mithin sind also an der Maschinen-Führungsfläche 23 Aussparungen zur Bereitstellung der Maschinen-Steckaufnahmen 28 vorgesehen.

Die Stützkörper 64, 65 bilden Steckvorsprünge 64A, 65A zum Einstecken in die Maschinen-Steckaufnahmen 28. Die Maschinen-Steckaufnahmen 28 bilden Formschlussaufnahmen und/oder Bestandteile von Formschlusshaltemitteln.

An jedem Seitenschenkel 37 sind jeweils ein Stützkörper 64 und ein Stützkörper 65 vorgesehen. Beide Stützkörper 64 und 65 eines jeweiligen Seitenschenkels 37 greifen in ein und dieselbe Maschinen-Steckaufnahme 28 ein.

Selbstverständlich wäre es möglich, dass an den Seitenschenkeln 27 des Maschinen-Führungskörpers 22 für jeden Stützkörper 64 oder 65 eine separate Steckaufnahme vorgesehen sind, auch wenn das in der Zeichnung nicht dargestellt ist.

Zwischen den Stützkörpern 64 und 65 sind Rastvorsprünge 67 zur Bereitstellung von Rastmitteln 66 vorgesehen. Die Rastvorsprünge 67 weisen an ihren freien Endbereichen Rastkonturen 68 auf, die zum Verrasten mit den Maschinen-Steckaufnahmen 28, die insoweit Rastaufnahmen bilden, ausgestaltet sind. Die Rastvorsprünge 67, die beispielsweise als Rasthaken 67A ausgebildet sind, verhaken sich mit den Maschinen-Steckaufnahmen 28 und stützen sich an einer von der Maschinen-Führungsfläche 23 abgewandten Seite an dem Maschinen-Führungskörper 22, also an den Randbereichen der Maschinen-Steckaufnahmen 28, ab. Die Rastvorsprünge 67 können von einem Bediener ergriffen werden, beispielsweise mit seinen Fingern, sodass er die beiden Rastvorsprünge 67 aufeinander zu, d. h. in Richtung der Aussparung 47, bewegen kann, was als eine Lösebewegung LK in der Zeichnung angedeutet ist, um die Rastvorsprünge 67 außer Eingriff mit den Steckaufnahmen oder Rastaufnahmen 28 zu bringen.

Die Stützkörper 64 wirken dabei im Sinne einer Stabilisierung, d. h. sie stützen die Absaugvorrichtung 30 bei der Lösebetätigung oder Lösebewegung LK ab, indem sie eine Bewegung der Seitenschenkel 37 aufeinander zu verhindern, an denen die Rastvorsprünge 67 angeordnet sind.

Die Stützkörper 64 sind an den Längsendbereichen der Seitenschenkel 37 vorgesehen, beispielsweise in Verlängerung der Stirnwand 49 oder als Verlängerung der Stirnwand 49.

Neben der Stirnwand 49 erstreckt sich die Innenwand 48, welche die Aussparung 47 begrenzt, wobei die Stirnwand 49 und die Innenwand 48 zueinander winkelig sind. Aufgrund der zueinander winkeligen Wände 48 und 49 sind die Stützkörper 64, die in der Art von Dornen oder Stützvorsprüngen ausgestaltet sind, besonders steif.

Wenn also die Stützkörper 64 in die Maschinen-Steckaufnahmen 28 eingreifen, stützen sie die Seitenschenkel 37 der Absaugvorrichtung 30 bezüglich Bewegungen im Sinne einer Verengung der Aussparung 47 oder einer Aufweitung der Aussparung 47 ab. Somit können die Stützkörper 64 in besonderer Weise im Sinne einer Abstützung bei der Lösebewegung LK wirken.

Die Maschinen-Steckaufnahmen 28, in die auch die Rastvorsprünge 67 eingreifen, sind beispielsweise als Langlöcher ausgestaltet, sodass die in Reihenanordnung nebeneinander angeordneten Stützkörper 64, 65 sowie dazwischen angeordneten Rastvorsprünge 67 in ein und dieselbe Maschinen-Steckaufnahme 28 eingreifen können.

Die Stützkörper 64 und die Stützkörper 65 sind zur Abstützung an einander entgegengesetzten Längsendbereichen der Maschinen-Steckaufnahmen 28 vorgesehen. Beide Stützkörper 64 und 65 wirken einander entgegengesetzten Schiebebewegungen des Maschinen-Führungskörpers 22 entlang der Steckbahn SB1 entgegen.

Die Maschinen-Steckaufnahmen 28 und/oder 29 sind beispielsweise als Durchtrittsöffnungen ausgestaltet. Die Maschinen-Steckaufnahmen 28 und 29 bilden beispielsweise Rastaufnahmen und/oder Formschlussaufnahmen und/oder Steckaufnahmen, also ganz allgemein Aufnahmen für die Befestigungsmittel 60, 160, 260.

Die Stützkörper 65 wirken einer Lösebewegung bzw. einem Ausziehen des Maschinen-Führungskörpers 22, insbesondere der Randpartie 24, aus der Steckaufnahme 61 entgegen und bilden bezüglich der Steckaufnahme 61 Steck-Fixiermittel 74.

Am Boden der Steckaufnahme 62 und/oder an der Bodenwand 43 ist ein Vorsprung 69 angeordnet. Der Vorsprung 69 kann beispielsweise zur Abstützung an der Maschinen-Führungsfläche 23 vorgesehen sein und/oder als Hilfsmittel für ein Werkzeug, beispielsweise ein Spritzwerkzeug, mit dem die Absaugvorrichtung 30 herstellbar ist. Wenn eine nachfolgend erläuterte, an einem Grundschenkel der Maschinen-Führungsfläche 23 angeordnete Maschinen-Steckaufnahme 29 nicht vorhanden ist, kann sich der Vorsprung 69 an der Maschinen-Führungsfläche 23 abstützen. Eine Ausführungsform der Maschinen-Führungsfläche 23 oder des Maschinen-Führungskörpers 22 ohne Maschinen-Steckaufnahme 29 ist bei Verwendung der Absaugvorrichtung 30 bevorzugt.

Weitere Steck-Fixiermittel 74 können beispielsweise auch durch den Vorsprung 69 gebildet sein, wenn dieser eine Rastkontur bildet. Der Vorsprung 69, sozusagen die Rastkontur, kann beispielsweise in die eine Rastaufnahme bildende Maschinen-Steckaufnahme 29 rastend eingreifen, wenn die Randpartie 24 in die Steckaufnahme 61 entlang der Steckbahn SB1 eingesteckt wird.

Somit sorgen die Stützkörper 64, 65 für einen formschlüssigen Halt der Randpartie 24 bzw. des Maschinen-Führungskörpers 22 in der Steckaufnahme 61.

Die Rastmittel 66, insbesondere die Rastvorsprünge 67, wirken einem Lösen des Maschinen-Führungskörpers 22 aus der Steckaufnahme 62 entlang der Steckbahn SB2 entgegen und bilden bezüglich der Steckaufnahme 61 Steck-Fixiermittel 75.

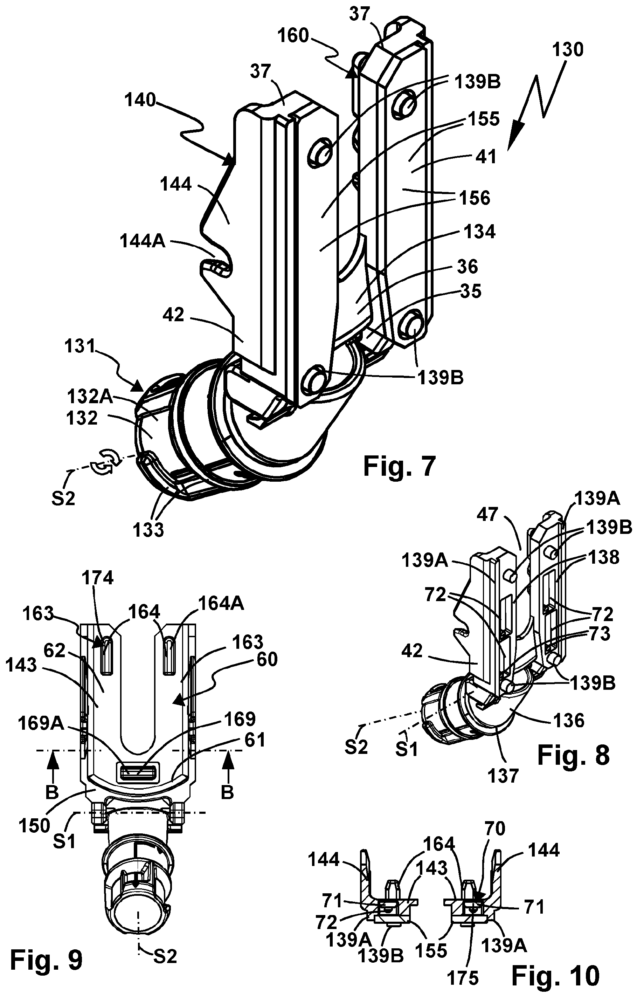

Eine Absaugvorrichtung 130 gemäß Figur 7-10 weist ähnliche oder gleiche Bestandteile wie die Absaugvorrichtung 30 auf.

Die Absaugvorrichtung 130 umfasst eine Stützpartie 41 zum Abstützen an dem Maschinen-Führungskörper 22 sowie eine Absaugpartie 42 mit einem Absauganschluss 131. Der Absauganschluss 131 umfasst einen Anschlussstutzen 132 als einen Anschlusskörper 132A, an dessen Außenumfang Formschlusskonturen 133, beispielsweise bajonettartige Formschlusskonturen 133, zum Anschließen des Anschlussstücks 94 oder eines anderen, Bajonettkonturen aufweisenden Anschlussstückes eines Saugschlauches angeordnet sind.

Ein bevorzugtes Konzept sieht vor, dass der Anschlussstutzen 132 drehbar oder Schwenkachse um eine Achse S2 bezüglich eines Grundkörpers 140 der Absaugvorrichtung 30 ist. Dazu ist an dem Grundkörper 140 beispielsweise ein Rohrkörper 136 angeordnet, an dem der Anschlussstutzen 132 schwenkbar gelagert ist, beispielsweise anhand eines Schwenklagers 137. Das Schwenklager 137 ist beispielsweise dadurch gebildet, dass flanschartige Vorsprünge und Aufnahmen des Anschlussstutzens 132 und des Rohrkörpers 136 ineinander eingreifen. Der Rohrkörper 136 und der Anschlussstutzen 132 sind miteinander strömungsverbunden.

Der Rohrkörper 136 weist eine Einlassöffnung auf, die zu einem Ansaugbereich 35 zwischen Seitenschenkeln 37 der Absaugvorrichtung 130 offen ist und mit diesem strömungsverbunden ist.

Der Grundkörper 140 weist also die beiden Seitenschenkel 37 sowie eine Basis 36 auf, von der die Seitenschenkel 37 abstehen.

Der Grundkörper 140 weist ebenso wie der Grundkörper 40 Steckaufnahmen 61 und 62 auf, in die der Maschinen-Führungskörper 22 einsteckbar ist. Die Steckaufnahmen 61 und 62 sowie magnetische Haltemittel 70 bilden Bestandteile von Befestigungsmitteln 160 der Absaugvorrichtung 130.

Von einer Bodenwand 143 des Grundkörpers 140, die sozusagen die Basis der Stützpartie 41 darstellt, stehen Seitenwände 144 in der Art von Seitenschenkeln winkelig ab, an denen Schmalseiten des Maschinen-Führungskörpers 22 abstützbar sind. Die Seitenwände 144 sowie die Bodenwand 143 begrenzen die Steckaufnahme 62.

Die Bodenwand 143 sowie eine dieser im Bereich des Absauganschlusses 131 gegenüberliegende Deckwand 150 und Abschnitte der Seitenwände 144 begrenzen die Steckaufnahme 61.

An den Seitenwänden 144 können Ausnehmungen 144A vorgesehen sein, in die beispielsweise die Verbindungselemente 27A oder andere vor den Maschinen-Führungskörper 22 vorstehende Konturen eingreifen können.

Im Ergebnis ist also der Maschinen-Führungskörper 22 entlang der bereits erläuterten Steckbahnen SB1 und SB2 in die Steckaufnahmen 61 und 62 einsteckbar, wobei Steck-Fixiermittel 174 und 175 den Maschinen-Führungskörper 22 in den Steckaufnahmen 61 und 62 fixieren.

Die Steck-Fixiermittel 174 umfassen Steckvorsprünge oder Stützkörper 164 zum Eingriff in die Maschinen-Steckaufnahmen 28. Die Steckbahnen SB1 und SB2 verlaufen in zueinander winkeligen Steckrichtungen SR1 und SR2.

Vorteilhaft umfassen die Steck-Fixiermittel 174 weiterhin einen Steckvorsprung 169, der auch als einen Rastvorsprung angesehen werden kann, der zum Eingriff in die Steckaufnahme oder Rastaufnahme 29 vorgesehen und ausgestaltet ist. Der Steckvorsprung oder Rastvorsprung 169 befindet sich sozusagen an der Basis 36 an einem Bodenbereich der Steckaufnahme 61. Beispielsweise ist der Steckvorsprung 169 als eine Rastkontur 169A und somit als ein Rastmittel ausgestaltet.

Die Steck-Fixiermittel 175 umfassen magnetische Haltemittel 70. Die magnetischen Haltemittel 70 umfassen mehrere Magnete 71 für einen magnetischen Halt an dem Führungskörper 22. Die Magnete 71 sorgen für einen magnetischen Halt der Absaugvorrichtung 130 am Maschinen-Führungskörper 22, beispielsweise wenn dieser aus ferromagnetischem Metall besteht. Entgegen der Kraft der Magnete 71 muss also die Absaugvorrichtung 30 vom Führungskörper 22 entfernt werden, sodass dieser aus der Steckaufnahme 62 heraus gelangt, wenn die Absaugvorrichtung 30 nicht mehr benötigt wird.

Die Magnete 71 sind in Aufnahmen 72 des Grundkörpers 140 aufgenommen. Die Aufnahmen 72 sind beispielsweise an den Seitenschenkeln 37 angeordnet. Vorteilhaft ist in einer jeweiligen Aufnahme 72 eine Klemmkontur 73, beispielsweise ein Klemmvorsprung, zum Verklemmen des in der Aufnahme 72 aufgenommenen Magneten 71 angeordnet. Die Magneten 71 können beispielsweise stoffschlüssig in den Aufnahmen 72 gehalten sein, zum Beispiel verklebt sein.

Die Aufnahmen 72 sind beispielsweise an der Bodenwand 43 vorgesehen, insbesondere an ihrer von der Steckaufnahme 62 abgewandten Seite. Die Aufnahmen 72 sind beispielsweise in Richtung einer Führungskontur 155 der Absaugvorrichtung 130 offen, jedoch durch Führungselemente 156 verschlossen. Somit sind die Aufnahmen 72 und die darin angeordneten Magnete 71 sowohl an ihrer von der Steckaufnahme 62 abgewandten Seite als auch an ihrer der Steckaufnahme 62 zugewandten Seite abgedeckt.

Die Führungselemente 156 sind beispielsweise aus Kunststoff oder Metall. Bevorzugt bestehen die Führungselemente 156 aus einem ferromagnetischen Mehrteiler, sodass die Magnete 71 auch die Führungselemente 156 magnetisch am Grundkörper 140 halten können.

An einer von der Steckaufnahme 62 abgewandten Seite weist der Grundkörper 140 Aufnahmen 138 für die Führungselemente 156 auf. Die Führungselemente 156 sind beispielsweise plattenartig ausgestaltet und weisen Ausnehmungen auf, in die Haltevorsprünge 139B an den Aufnahmen 138 eingreifen. Die Haltevorsprünge 139B sind beispielsweise in der Art von Stützvorsprüngen, Rastvorsprüngen oder dergleichen ausgestaltet. Weiterhin sind die Aufnahmen 138 durch Seitenschenkel 139A begrenzt, die von der Bodenwand 143 winkelig abstehen.

Vorteilhaft sind die Führungselemente 156 in der Art von Führungskufen oder dergleichen ausgestaltet, mit denen die Absaugvorrichtung 130 und somit auch die Hand-Sägemaschine 10, an der die Absaugvorrichtung 130 befestigt ist, an dem Werkstück W entlang führbar sind.

Die Führungselemente 156 erstrecken sich entlang der Seitenschenkel 37 und sind seitlich neben der Aussparung 47 angeordnet, in die das Sägewerkzeug 15 eingreifen kann.

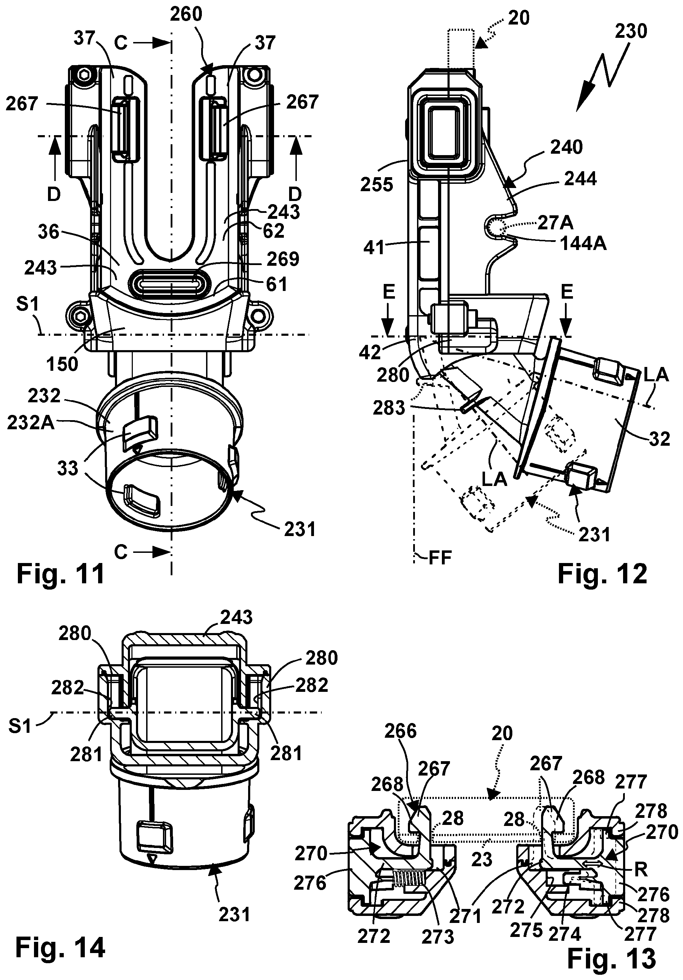

Exemplarisch ist eine weitere Schwenkbarkeit des Anschlussstutzens 132 bzw. des Absauganschlusses 131 bezüglich des Grundkörpers 140 um eine Schwenkachse S1 in Figur 8 angedeutet, wobei die Schwenkachsen S1 und S2 zueinander winkelig sind, beispielsweise rechtwinkelig. Ein Lagerungskonzept zur gegebenenfalls zur Schwenkbarkeit um die Schwenkachse S2 zusätzlichen oder alternativen Schwenkbarkeit des Anschlussstutzens 132 um die Schwenkachse S1 ist im Zusammenhang mit der Absaugvorrichtung 230 und deren Anschlussstutzen 232 gemäß Figuren 11-13 erläutert.

An dieser Stelle sei erwähnt, dass das Lagerungskonzept des einen Anschlusskörper 232A bildenden Anschlussstutzens 232 und des Anschlussstutzens 132 einzeln oder in Kombination auch bei der Absaugvorrichtung 130 realisierbar sind.

Der Anschlussstutzen 232 ist anhand von Schwenklagern 280 bezüglich eines Grundkörpers 240 der Absaugvorrichtung 230 um die Schwenkachse S1 schwenkbar gelagert.

An dem Grundkörper 240 sind Lageraufnahmen 282 angeordnet, insbesondere im Bereich einer Steckaufnahme 61 des Grundkörpers 240, in die Lagerzapfen oder Lagervorsprünge 281, die am Anschlussstutzen 232 angeordnet sind, eingreifen. Die Lagervorsprünge 281 stehen nach außen vor den Anschlussstutzen 232 vor und greifen in die als beispielsweise Aufnahmekammern ausgestaltete Lageraufnahmen 282 ein.

Weiterhin ist an dem Anschlussstutzen 232 ein Schwenkanschlag 283 vorgesehen, der die Schwenkbewegung des Anschlussstutzens in Richtung einer zu einer Führungskontur 255 der Absaugvorrichtung 230 fluchtenden Position begrenzt. Beispielsweise ist der Schwenkanschlag 283 durch einen Flanschvorsprung gebildet, der einer Außenumfangsfläche des Grundkörpers 240 anschlägt.

Der Grundkörper 240 entspricht im Wesentlichen den Grundkörpern 40, 140 und weist beispielsweise die Steckaufnahme 61 sowie eine weitere, durch den Seitenschenkeln 44, 144 funktional gleichende Seitenschenkel 244 begrenzte Steckaufnahme 62 auf.

Am Boden der Steckaufnahme 62 ist beispielsweise eine Rastkontur 269 zum Eingriff in die Steckaufnahme oder Rastaufnahme 29 des Maschinen-Führungskörper 22 vorgesehen.

Weiterhin sind Rastmittel 266 vorgesehen, die funktional ähnlich wie die Rastmittel 66 ausgestaltet sind, jedoch davon abweichend Rastvorsprünge 267 aufweisen, die anhand von Betätigungsabschnitten 276 bequem bedienbar sind.

Die Steckaufnahmen 61, 62 und die Rastmittel 266 bilden Befestigungsmittel 260 und/oder Formschlusshaltemittel 263 der Absaugvorrichtung 230.

Die Rastvorsprünge 267 weisen an ihren freien, zum Eingriff in die Rastaufnahmen oder Maschinen-Steckaufnahmen 28 vorgesehenen Endbereichen Rastkonturen 268, beispielsweise Hakenkonturen, auf. Die Hakenkonturen oder Rastkonturen 268 können durch eine Verschiebebewegung R (Figur 13) außer Eingriff und in Eingriff mit den Steckaufnahmen oder Rastaufnahmen 28 gebracht werden.

Die Rastvorsprünge 267 weisen Lagerabschnitte 272 auf, die in Lageraufnahmen 271 von Schiebelagern 270 verschieblich bezüglich der Bewegung R gelagert sind. Die Lageraufnahmen 271 befinden sich beispielsweise an oder im Bereich der Bodenwand 243 des Grundkörpers 240.

Die Rastvorsprünge 267 sind durch Federn 273 in Richtung ihrer Raststellung belastet. In Figur 13 ist nur eine Feder dargestellt, wobei auch der Rastvorsprung 267 in der Zeichnung rechts eine derartige Feder aufweist. Die Federn 273 sind an Stützvorsprüngen 274 der Lagerabschnitte 272 oder der Rastvorsprünge 267 sowie an einer Stützfläche 275 der Lageraufnahme 271 abgestützt. Die Stützflächen 275 begrenzen die Lösebewegung der Rastvorsprünge 267 und ihr gegenüberliegende Anschläge 278 der Lageraufnahmen 271 begrenzen die Bewegung der Rastvorsprünge 267 in Richtung ihrer Raststellung. An den Anschlägen 278 schlagen Anschläge 277 der Rastvorsprünge 267 an, die beispielsweise vor die Betätigungsabschnitte 276 vorstehen.

Die Betätigungsabschnitte 276 weisen Betätigungsflächen auf, die an den Außenseiten der Seitenschenkel 244 des Grundkörpers 240 angeordnet sind. Somit kann also ein Bediener die Betätigungsflächen bequem mit einer Art Klemmbewegung seiner Finger aufeinander zu betätigen, um die Rastvorsprünge 267 außer Eingriff mit den Rastaufnahmen oder Maschinen-Steckaufnahmen 28 zu bringen.

Die Führungskontur 55 liegt im Bereich des Sägewerkzeugs 15, also beispielsweise im Bereich der Aussparung 47, wenn die Absaugvorrichtung 30, 130, 230 an dem Maschinen-Führungskörper 22 befestigt ist, in einer Führungsebene FF oder spannt eine Führungsebene FF auf. Die Führungsebene FF ist diejenige Ebene, mit der sich die Absaugvorrichtung 30, 130, 230 im Bereich des Sägewerkzeugs 15 am Werkstück W abstützt. Nun ist es prinzipiell möglich, dass eine Längsachse LA des Anschlusskörpers 32A, 132A, 232A parallel zur Führungsebene FF verläuft. Bevorzugt ist jedoch ein Winkel WI zwischen der Längsachse LA und der Führungsebene FF, zum Beispiel ein fester Winkel in einem Bereich von 15° bis 80°. Somit kann der Saugschlauch 91 schräg von der Absaugvorrichtung 30, 130, 230 weg an dem Maschinengehäuse 17A vorbei verlaufen. Der Winkel WI kann aber auch veränderlich sein, zum Beispiel anhand einer Schwenklageranordnung. Beispielhaft ist in Figur 12 eine derartige Schwenkbarkeit bzw. Veränderung der Lage der Längsachse LA bezüglich der Führungsebene FF eingezeichnet, die anhand des Schwenklagers 280 realisiert ist.

## Patentansprüche

1. Tragbare Hand-Sägemaschine (10), wobei die Hand-Sägemaschine (10) eine Säbelsäge ist und eine Absaugvorrichtung (30; 130; 230) aufweist, wobei die Hand-Sägemaschine (10) ein Maschinengehäuse (17), in dem ein Antriebsmotor (11) angeordnet ist, und eine durch den Antriebsmotor (11) entlang einer Bewegungsachse (SO) linear oszillierend antreibbare Werkzeugaufnahme (14) für ein eine Längsgestalt aufweisendes und sich entlang einer Längsachse erstreckenden Sägewerkzeug (15) zum Einbringen eines Sägeschnittes in ein Werkstück (W) aufweist, wobei die Hand-Sägemaschine (10) einen Maschinen-Führungskörper (22) mit einer von dem Maschinengehäuse (17) abgewandten Maschinen-Führungsfläche (23), vor die das Sägewerkzeug (15) im an der Hand-Sägemaschine (10) montierten Zustand vorsteht, zum Führen der Hand-Sägemaschine (10) an dem Werkstück (W) aufweist, wobei die Absaugvorrichtung (30; 130; 230) Befestigungsmittel (60; 160; 260) zur lösbaren Befestigung an der Hand-Sägemaschine (10) und einen Absauganschluss (31) zum Anschließen eines Saugschlauches (91) aufweist, sodass bei einer Bearbeitung des Werkstücks (W) entstehende Partikel von dem Maschinen-Führungskörper (22) weg durch den Absauganschluss (31) absaugbar sind, wobei die Absaugvorrichtung (30; 130; 230) mindestens eine Führungskontur (55; 155; 255) aufweist, die im an der Hand-Sägemaschine (10) montierten Zustand der Absaugvorrichtung (30; 130; 230) vor die Maschinen-Führungsfläche (23) vorsteht, sodass die Hand-Sägemaschine (10) anstelle der Maschinen-Führungsfläche (23) anhand der mindestens einen Führungskontur (55; 155; 255) an dem Werkstück (W) führbar ist.

2. Hand-Sägemaschine (10) nach Anspruch 1, **dadurch gekennzeichnet, dass** die Absaugvorrichtung (30; 130; 230), insbesondere die mindestens eine Führungskontur (55; 155; 255), die Maschinen-Führungsfläche (23) zumindest partiell oder nur partiell überdeckt und/oder dass mindestens ein Teilabschnitt der Maschinen-Führungsfläche (23) vor die Absaugvorrichtung (30; 130; 230), insbesondere die mindestens eine Führungskontur (55; 155; 255), im an der Hand-Sägemaschine (10) montierten Zustand der Absaugvorrichtung (30; 130; 230) vorsteht und/oder dass die mindestens eine Führungskontur (55; 155; 255) vor den Maschinen-Führungskörper (22) vorsteht und/oder dass die Absaugvorrichtung (30; 130; 230) eine Stützpartie (41) zur Abstützung an der Maschinen-Führungsfläche (23) aufweist, wobei vorteilhaft vorgesehen ist, dass die Stützpartie (41) zur Aufnahme eines Teils der Maschinen-Führungsfläche (23) derart ausgestaltet ist, dass ein anderer Teil der Maschinen-Führungsfläche (23) vor die Absaugvorrichtung (30; 130; 230) vorsteht.

3. Hand-Sägemaschine (10) nach Anspruch 1 oder 2, **dadurch gekennzeichnet, dass** die Befestigungsmittel (60; 160; 260) ausschließlich zur Befestigung an dem Maschinen-Führungskörper (22) vorgesehen und ausgestaltet sind und/oder die Absaugvorrichtung (30; 130; 230) keine Befestigungsmittel (60; 160; 260) zur Befestigung an dem Maschinengehäuse (17) der Hand-Sägemaschine (10) aufweisen und/oder keine Partie aufweisen, die im an der Hand-Sägemaschine (10) montierten Zustand der Absaugvorrichtung (30; 130; 230) in einen Zwischenraum zwischen dem Maschinen-Führungskörper (22) und dem Maschinengehäuse (17) eingreift, und/oder dass die Befestigungsmittel (60; 160; 260) Formschlusshaltemittel (63, 163, 263), insbesondere mindestens einen Formschlussvorsprung oder mindestens eine Formschlussaufnahme, zu einem formschlüssigen Halt an dem Maschinen-Führungskörper (22) und/oder Rastmittel (66; 266) zum Verrasten der Absaugvorrichtung (30; 130; 230) an dem Maschinen-Führungskörper (22) und/oder magnetische Haltemittel (70) zum magnetischen Halten der Absaugvorrichtung (30; 130; 230) an dem Maschinen-Führungskörper (22) aufweisen, wobei vorteilhaft vorgesehen ist, dass die Formschlusshaltemittel (63, 163, 263) und/oder die Rastmittel (66; 266) und/oder die magnetischen Haltemittel (70) an einer Stützpartie (41) der Absaugvorrichtung angeordnet sind, an der die Maschinen-Führungsfläche (23) des Maschinen-Führungskörpers (22) abgestützt oder abstützbar ist.

4. Hand-Sägemaschine (10) nach einem der vorhergehenden Ansprüche, **dadurch gekennzeichnet, dass** die Befestigungsmittel (60; 160; 260) mindestens eine Steckaufnahme (61) zum Einstecken des Maschinen-Führungskörpers (22) und/oder mindestens einen Steckvorsprung (64A, 64B, 67) zum Einstecken in eine Maschinen-Steckaufnahme (28) entlang einer Steckbahn (SB1), insbesondere einer Steckachse, aufweisen.

5. Hand-Sägemaschine (10) nach Anspruch 4, **dadurch gekennzeichnet, dass** die mindestens eine Steckaufnahme (61) in der Art einer Aufnahmetasche ausgestaltet ist und/oder zur Aufnahme einer Randpartie (24) des Maschinen-Führungskörpers (22) ausgestaltet ist, wobei die Randpartie (24) einen Teil der Maschinen-Führungsfläche (23) sowie eine zu der Maschinen-Führungsfläche (23) winkelige Stirnseite (24A) des Maschinen-Führungskörpers (22) aufweist, und/oder dass an der Steckaufnahme (61) und/oder an dem mindestens einen Steckvorsprung (64A, 65A, 67) Rastmittel (66; 266), insbesondere Rasthaken, zum Verrasten mit dem Maschinen-Führungskörper (22) vorgesehen sind und/oder dass der mindestens eine Steckvorsprung (64A, 65A, 67) als ein Rasthaken (67A) ausgestaltet ist und/oder dass die mindestens eine Steckaufnahme (61) zum Einstecken des Maschinen-Führungskörpers (22) in einer ersten Steckrichtung (SR1) vorgesehen ist und die Befestigungsmittel (60; 160; 260) Steck-Fixiermittel (74, 75) zum Fixieren der Absaugvorrichtung quer zu der ersten Steckrichtung (SR1) aufweisen, wobei vorteilhaft vorgesehen ist, dass der mindestens eine Steckvorsprung (64A, 65A, 67) die Steck-Fixiermittel (74, 75) oder einen Teil davon bildet und zum Einstecken in die Maschinen-Steckaufnahme (28) in einer zu der ersten Steckrichtung (SR1) winkeligen, insbesondere etwa rechtwinkeligen, zweiten Steckrichtung (SR2) oder Bogenbahn, ausgestaltet ist.

6. Hand-Sägemaschine (10) nach einem der vorhergehenden Ansprüche, **dadurch gekennzeichnet, dass** die Befestigungsmittel (60; 160; 260) einen Rastkörper, insbesondere einen Rasthaken, zum Verrasten mit dem Maschinen-Führungskörper (22) und mindestens einen Stützkörper (64, 65) zum formschlüssigen Fixieren und/oder Abstützen der Absaugvorrichtung (30; 130; 230) an dem Maschinen-Führungskörper (22) bezüglich einer Lösebewegung zum Lösen des Rastkörpers aus einem Rasteingriff mit dem Maschinen-Führungskörper (22) und/oder einer Fixierbewegung des Rastkörpers zum Verrasten der Absaugvorrichtung (30; 130; 230) mit dem Maschinen-Führungskörper (22) aufweisen, wobei vorteilhaft vorgesehen ist, dass der Rastkörper und der mindestens eine Stützkörper (64, 65) unmittelbar nebeneinander angeordnet sind und/oder beide zu einem gemeinsamen Eingriff in eine Maschinen-Steckaufnahme (28) des Maschinen-Führungskörpers (22) ausgestaltet sind.

7. Hand-Sägemaschine (10) nach einem der vorhergehenden Ansprüche, **dadurch gekennzeichnet, dass** die Absaugvorrichtung (30; 130; 230) mindestens eine Seitenwand (44) aufweist, deren Schmalseite oder Stirnseite die Führungskontur (55; 155; 255) oder ein Bestandteil der Führungskontur (55; 155; 255) bildet.

8. Hand-Sägemaschine (10) nach einem der vorhergehenden Ansprüche, **dadurch gekennzeichnet, dass** die Absaugvorrichtung (30; 130; 230) mindestens zwei Seitenwände (44) mit einem Abstand zueinander aufweist, wobei der Abstand zur Aufnahme des Sägewerkzeugs (15) ausgestaltet und vorgesehen ist und/oder einen Bestandteil eines zu dem Absauganschluss (31) führenden Strömungskanals (52) bildet, und/oder dass die Führungskontur (55; 155; 255) eine U-förmige Gestalt aufweist.

9. Hand-Sägemaschine (10) nach einem der vorhergehenden Ansprüche, **dadurch gekennzeichnet, dass** zumindest ein Teil der Führungskontur (55; 155; 255) an einem Führungselement (156) angeordnet ist, welches lösbar an einem Grundkörper (40; 140; 240) der Absaugvorrichtung (30; 130; 230) befestigt oder befestigbar ist, und/oder dass der Absauganschluss (31) einen Anschlussstutzen (32) aufweist, der zum Anstecken eines Saugschlauches (91) ausgestaltet ist und bezüglich eines zur Verbindung mit dem Maschinen-Führungskörper (22) vorgesehenen und ausgestalteten Grundkörpers (40; 140; 240) der Absaugvorrichtung drehbar gelagert ist.

10. Hand-Sägemaschine (10) nach einem der vorhergehenden Ansprüche, **dadurch gekennzeichnet, dass** die Absaugvorrichtung (30; 130; 230) einen Strömungskanal (52) aufweist, der sich zwischen einem Aufnahmebereich für das Sägewerkzeug (15) und dem Absauganschluss (31) erstreckt, wobei der Strömungskanal (52) an der Maschinen-Führungsfläche (23) entlang und/oder an einer von dem Maschinengehäuse (17) abgewandten Seite des Maschinen-Führungskörpers (22) verläuft, wenn die Absaugvorrichtung (30) an der Hand-Sägemaschine (10) befestigt ist.

11. Hand-Sägemaschine (10) nach einem der vorhergehenden Ansprüche, **dadurch gekennzeichnet, dass** die Absaugvorrichtung (30; 130; 230) ganz oder teilweise aus insbesondere faserverstärktem Kunststoff besteht und/oder dass die Absaugvorrichtung (30; 130; 230) aus einem anderen Material als der Maschinen-Führungskörper besteht, wobei vorteilhaft vorgesehen ist, dass die Absaugvorrichtung (30; 130; 230) ganz oder teilweise aus Polycarbonat-Acrylnitril-Butadien-Styrol-Copolymer (PC-ABS) und/oder Polyoxymethylen (POM) und/oder Polyamid, insbesondere Polyamid mit Glasfaser-Verstärkung besteht, insbesondere aus PA6GFx, wobei x für einen prozentualen Anteil von Glasfasern steht und insbesondere zwischen 5 und 50 liegt.

12. Hand-Sägemaschine (10) nach einem der vorhergehenden Ansprüche, **dadurch gekennzeichnet, dass** die Führungskontur (55) , insbesondere in einem für das Sägewerkzeug (15) vorgesehenen Bereich, eine Führungsebene (FF) aufspannt oder in einer Führungsebene (FF) liegt, und dass eine Längsachse (LA) des Absauganschlusses (31) in einem Winkel (WI) bezüglich der Führungsebene (FF) verläuft, wobei vorteilhaft vorgesehen ist, dass der Winkel (WI) zwischen 15° und 85°, insbesondere zwischen 30° und 80°, liegt.

13. Hand-Sägemaschine (10) nach einem der vorhergehenden Ansprüche, **dadurch gekennzeichnet, dass** der Absauganschluss (31) anhand mindestens eines Schwenklagers (280) bezüglich eines die Führungskontur (55) aufweisenden Grundkörpers (40) um mindestens eine Schwenkachse (S1, S2) schwenkbar gelagert ist.

14. Hand-Sägemaschine (10) nach einem der vorhergehenden Ansprüche, **dadurch gekennzeichnet, dass** an der Maschinen-Führungsfläche (23) des Maschinen-Führungskörpers (22) mindestens eine Aufnahme für die Befestigungsmittel (60; 160; 260) der Absaugvorrichtung (30) angeordnet ist, insbesondere mindestens eine Formschlussaufnahme zum formschlüssigen Halten und/oder Aufnehmen von Formschlusshaltemitteln (63; 163; 263) der Absaugvorrichtung (30) und/oder mindestens eine Maschinen-Steckaufnahme (28) zum Einstecken eines Steckkörpers oder Stützkörpers (64, 65) der Absaugvorrichtung (30) und/oder mindestens eine Rastaufnahme zum Verrasten eines Rastvorsprungs (67) der Befestigungsmittel (60; 160; 260).

15. Hand-Sägemaschine (10) nach einem der vorhergehenden Ansprüche, **dadurch gekennzeichnet, dass** der Maschinen-Führungskörper (22) an dem Maschinengehäuse (17) anhand einer Lagereinrichtung (21V), insbesondere eines Schiebelagers, verstellbar gelagert ist, sodass die Maschinen-Führungsfläche (23) zwischen mindestens zwei voneinander verschiedenen Relativpositionen bezüglich des Maschinengehäuses (17) verstellbar ist, und/oder dass das Maschinengehäuse (17) eine pistolenartige Gestalt aufweist und/oder die Maschinen-Führungsfläche (23) kürzer als eine maximale Längserstreckung des Maschinengehäuses (17) ist und/oder der Antriebsmotor (11) von einer Längsachse des Sägewerkzeugs (15) durchsetzt ist und/oder der Antriebsmotor (11) koaxial zu dem Sägewerkzeug (15) und/oder der Werkzeugaufnahme (14) ist.

## Claims

1. A handheld power saw (10), namely a saber saw, with a suction device (30; 130; 230), wherein the handheld power saw (10) has a machine housing (17) in which a drive motor (11) is arranged, and has a tool holder (14) which can be driven by the drive motor (11) in a linearly oscillating manner along an axis of movement (SO) for a sawing tool (15) having an elongate design and extending along a longitudinal axis for making a saw cut in a workpiece (W), wherein the handheld power saw (10) has a machine guide body (22) with a machine guide surface (23) facing away from the machine housing (17), in front of which the sawing tool (15) protrudes when mounted on the handheld power saw (10), for guiding the handheld power saw (10) on the workpiece (W), wherein the suction device (30; 130; 230) has fastening means (60; 160; 260) for detachable fastening on the handheld power saw (10) and has a suction connection (31) for connecting a suction hose (91) such that particles produced when the workpiece (W) is being machined can be suctioned away from the machine guide body (22) through the suction connection (31), **characterized in that** the suction device (30; 130; 230) has at least one guide contour (55; 155; 255) which, when the suction device (30; 130; 230) is mounted on the handheld power saw (10), protrudes in front of the machine guide surface (23) such that the handheld power saw (10) can be guided on the workpiece (W) by means of the at least one guide contour (55; 155; 255) instead of the machine guide surface (23).

2. The handheld power saw (10) of claim 1, **characterized in that** the suction device (30; 130; 230), in particular the at least one guide contour (55; 155; 255), covers at least partially or only partially the machine guide surface (23) and/or **in that** at least a portion of the machine guide surface (23) protrudes in front of the suction device (30; 130; 230), in particular the at least one guide contour (55; 155; 255), when the suction device (30; 130; 230) is mounted on the handheld power saw (10) and/or **in that** the at least one guide contour (55; 155; 255) protrudes in front of the machine guide body (22) and/or **in that** the suction device (30; 130; 230) has a support part (41) for support on the machine guide surface (23), wherein it is advantageously provided that the support part (41) is designed to receive part of the machine guide surface (23) in such a way that another part of the machine guide surface (23) protrudes in front of the suction device (30; 130; 230).

3. The handheld power saw (10) of claims 1 or 2, **characterized in that** the fastening means (60; 160; 260) are provided and designed exclusively for fastening to the machine guide body (22) and/or the suction device (30; 130; 230) has no fastening means (60; 160; 260) for fastening to the machine housing (17) of the handheld power saw (10). and/or have no part which engages in a space between the machine guide body (22) and the machine housing (17) when the suction device (30; 130; 230) is mounted on the handheld power saw (10) and/or **in that** the fastening means (60; 160; 260) have form-fitting holding means (63, 163, 263), in particular at least one form-fitting projection or at least one form-fitting receptacle, for a form-fitting hold on the machine guide body (22) and/or latching means (66; 266) for latching the suction device (30; 130; 230) on the machine guide body (22) and/or have magnetic holding means (70) for magnetically holding the suction device (30; 130; 230) on the machine guide body (22), wherein it is advantageously provided that the form-fitting holding means (63, 163, 263) and/or the latching means (66; 266) and/or the magnetic holding means (70) are arranged on a support part (41) of the suction device, on which the machine guide surface (23) of the machine guide body (22) is or can be supported.

4. The handheld power saw (10) of any one of the preceding claims, **characterized in that** the fastening means (60; 160; 260) have at least one plug-in receptacle (61) for insertion into the machine guide body (22) and/or have at least one plug-in projection (64A, 64B, 67) for insertion into a machine plug-in receptacle (28) along a plug-in path (SB1), in particular a plug-in axis.

5. The handheld power saw (10) of claim 4, **characterized in that** the at least one plug-in receptacle (61) is designed in the manner of a receiving pocket and/or is designed to receive an edge part (24) of the machine guide body (22), the edge part (24) having a part of the machine guide surface (23) and an end face (24A) of the machine guide surface (23) at an angle to the machine guide body (22), and/or **in that** on the plug-in receptacle (61) and/or on the at least one plug-in projection (64A, 65A, 67) latching means (66; 266), in particular latching hooks, are provided for latching with the machine guide body (22) and/or **in that** the at least one plug-in projection (64A, 65A, 67) is designed as a latching hook (67A) and/or **in that** the at least one plug-in receptacle (61) is provided for plugging in the machine guide body (22) in a first plug-in direction (SR1) and the fastening means (60; 160; 260) have plug-in fixing means (74, 75) for fixing the suction device transversely to the first insertion direction (SR1), wherein it is advantageously provided **in that** the at least one plug-in projection (64A, 65A, 67) forms the plug-in fixing means (74, 75) or a part thereof and is designed for plugging into the machine plug-in receptacle (28) in a second plug-in direction (SR2) or arcuate path which is angled, in particular approximately right-angled with respect to the first plug-in direction (SR1).

6. The handheld power saw (10) of any one of the preceding claims, **characterized in that** the fastening means (60; 160; 260) have a latching body, in particular a latching hook, for latching with the machine guide body (22) and at least one support body (64, 65) for form-fitting fixing and/or supporting the suction device (30; 130; 230) on the machine guide body (22) with respect to a release movement for releasing the latching body from a latching engagement with the machine guide body (22) and/or to a fixing movement of the latching body for latching the suction device (30; 130; 230) to the machine guide body (22), wherein it is advantageously provided that the latching body and the at least one support body (64, 65) are arranged directly adjacent to one another and/or both are designed for joint engagement in a machine plug-in receptacle (28) of the machine guide body (22).

7. The handheld power saw (10) of any one of the preceding claims, **characterized in that** the suction device (30; 130; 230) has at least one side wall (44), the narrow side or front side of which forms the guide contour (55; 155; 255) or a component of the guide contour (55; 155; 255).

8. The handheld power saw (10) of any one of the preceding claims, **characterized in that** the suction device (30; 130; 230) has at least two side walls (44) at a distance from one another, the distance being designed and provided to receive the sawing tool (15) and/or forms part of a flow channel (52) leading to the suction connection (31) and/or **in that** the guide contour (55; 155; 255) has a U-shape.

9. The handheld power saw (10) of any one of the preceding claims, **characterized in that** at least part of the guide contour (55; 155; 255) is arranged on a guide element (156) which is detachably fastened or fastenable to a base body (40; 140; 240) of the suction device (30; 130; 230) and/or **in that** the suction connection (31) has a connecting piece (32) which is designed for connecting a suction hose (91) and which is rotatably mounted with respect to a base body (40; 140; 240) of the suction device, which basic body is provided and designed for connection to the machine guide body (22).

10. The handheld power saw (10) of any one of the preceding claims, **characterized in that** the suction device (30; 130; 230) has a flow channel (52) which extends between a receiving region for the sawing tool (15) and the suction connection (31), the flow channel (52) extending on the machine guide surface (23) along and/or on a side of the machine guide body (22) facing away from the machine housing (17) when the suction device (30) is fastened to the handheld power saw (10).

11. The handheld power saw (10) of any one of the preceding claims, **characterized in that** the suction device (30; 130; 230) consists entirely or partially of, in particular, fiber-reinforced plastic and/or that the suction device (30; 130; 230) consists of a different material than does the machine guide body, wherein it is advantageously provided that the suction device (30; 130; 230) is made entirely or partially of polycarbonate-acrylonitrile-butadiene-styrene copolymer (PC-ABS) and/or polyoxymethylene (POM) and/or polyamide, in particular polyamide with a glass fiber reinforcement, consisting in particular of PA6GFx, wherein x represents a percentage of glass fibers and is in particular between 5 and 50.

12. The handheld power saw (10) of any one of the preceding claims, **characterized in that** the guide contour (55) spans a guide plane (FF) or lies in a guide plane (FF), in particular in a region provided for the sawing tool (15), and **in that** a longitudinal axis (LA) of the suction connection (31) extends at an angle (WI) with respect to the guide plane (FF), wherein it is advantageously provided that the angle (WI) is between 15° and 85°, in particular between 30° and 80°.

13. The handheld power saw (10) of any one of the preceding claims, **characterized in that** the suction connection (31) is pivotably mounted about at least one pivot axis (S1, S2) by means of at least one pivot bearing (280) with respect to a base body (40) having the guide contour (55).

14. The handheld power saw (10) of any one of the preceding claims, **characterized in that** at least one receptacle for the fastening means (60; 160; 260) of the suction device (30) is arranged on the machine guide surface (23) of the machine guide body (22), in particular at least one form-fitting receptacle for form-fittingly holding and/or receiving form-fitting holding means (63; 163; 263) of the suction device (30) and/or at least one machine plug-in receptacle (28) for inserting a plug-in body or support body (64, 65) of the suction device (30) and/or at least one latching receptacle for latching a latching projection (67) of the fastening means (60; 160; 260).

15. The handheld power saw (10) of any one of the preceding claims, **characterized in that** the machine guide body (22) is adjustably mounted on the machine housing (17) by means of a bearing device (21V), in particular a sliding bearing, such that the machine guide surface (23) can be adjusted between at least two mutually different relative positions with respect to the machine housing (17) and/or **in that** the machine housing (17) has a pistol-like shape and/or the machine guide surface (23) is shorter than a maximum longitudinal extension of the machine housing (17) and/or the drive motor (11) has a longitudinal axis of the sawing tool (15) passing through it and/or the drive motor (11) is coaxial to the sawing tool (15) and/or the tool holder (14).

## Revendications

1. Scie à main (10) portative, dans laquelle la scie à main (10) est une scie sabre et présente un dispositif d'aspiration (30 ; 130 ; 230), dans laquelle la scie à main (10) présente un carter de machine (17) dans lequel est disposé un moteur d'entraînement (11) et un logement d'outil (14) pouvant être entraîné de manière oscillante linéairement par le moteur d'entraînement (11) le long d'un axe de mouvement (SO) pour un outil de sciage (15) présentant une forme longitudinale et s'étendant le long d'un axe longitudinal pour pratiquer une coupe de sciage dans une pièce à usiner (W), dans laquelle la scie à main (10) présente un corps de guidage de machine (22) avec une surface de guidage de machine (23) opposée au carter de machine (17), devant laquelle l'outil de sciage (15) dépasse à l'état monté sur la scie à main (10), pour guider la scie à main (10) sur la pièce à usiner (W), dans laquelle le dispositif d'aspiration (30 ; 130 ; 230) présente des moyens de fixation (60 ; 160 ; 260) pour la fixation détachable sur la scie à main (10) et un raccord d'aspiration (31) pour le raccordement d'un flexible d'aspiration (91), de sorte que les particules générées lors d'un usinage de la pièce à usiner (W) puissent être aspirées à l'écart du corps de guidage de machine (22) par le raccord d'aspiration (31), dans laquelle le dispositif d'aspiration (30 ; 130 ; 230) présente au moins un contour de guidage (55 ; 155 ; 255) qui, à l'état monté sur la scie à main (10) du dispositif d'aspiration (30 ; 130 ; 230), dépasse devant la surface de guidage de machine (23) de sorte que la scie à main (10) puisse être guidée sur la pièce à usiner (W) au moyen de l'au moins un contour de guidage (55 ; 155 ; 255) au lieu de la surface de guidage de la machine (23).

2. Scie à main (10) selon la revendication 1, **caractérisée en ce que** le dispositif d'aspiration (30 ; 130 ; 230), en particulier l'au moins un contour de guidage (55 ; 155 ; 255), recouvre au moins partiellement ou seulement partiellement la surface de guidage de machine (23) et/ou qu'au moins une section partielle de la surface de guidage de machine (23) dépasse devant le dispositif d'aspiration (30 ; 130 ; 230), en particulier l'au moins un contour de guidage (55 ; 155 ; 255), dans l'état monté sur la scie à main (10) du dispositif d'aspiration (30; 130; 230) et/ou que l'au moins un contour de guidage (55 ; 155 ; 255) dépasse devant le corps de guidage de machine (22) et/ou que le dispositif d'aspiration (30 ; 130 ; 230) présente une partie d'appui (41) pour l'appui sur la surface de guidage de machine (23), dans lequel il est avantageusement prévu que la partie d'appui (41) soit conçue pour recevoir une portion de la surface de guidage de machine (23) de sorte qu'une autre portion de la surface de guidage de machine (23) dépasse devant le dispositif d'aspiration (30 ; 130 ; 230).

3. Scie à main (10) selon la revendication 1 ou 2, **caractérisée en ce que** les moyens de fixation (60 ; 160 ; 260) sont prévus et conçus exclusivement pour la fixation sur le corps de guidage de machine (22) et/ou le dispositif d'aspiration (30 ; 130 ; 230) ne présentent pas de moyens de fixation (60 ; 160 ; 260) pour la fixation sur le carter de machine (17) de la scie à main (10) et/ou ne présentent pas de partie qui, dans l'état monté sur la scie à main (10) du dispositif d'aspiration (30; 130; 230), s'insère dans un espace intermédiaire entre le corps de guidage de machine (22) et le carter de machine (17), et/ou que les moyens de fixation (60 ; 160 ; 260) présentent des moyens de maintien de liaison par coopération de formes (63, 163, 263), en particulier au moins une saillie de liaison par coopération de formes ou au moins un logement de liaison par coopération de formes, pour un maintien par coopération de formes sur le corps de guidage de machine (22) et/ou des moyens d'encliquetage (66 ; 266) pour l'encliquetage du dispositif d'aspiration (30 ; 130 ; 230) sur le corps de guidage de machine (22) et/ou des moyens de maintien magnétiques (70) pour maintenir magnétiquement le dispositif d'aspiration (30 ; 130 ; 230) sur le corps de guidage de machine (22), dans lequel il est avantageusement prévu que les moyens de maintien par coopération de formes (63, 163, 263) et/ou les moyens d'encliquetage (66 ; 266) et/ou les moyens de maintien magnétiques (70) soient disposés sur une partie d'appui (41) du dispositif d'aspiration sur laquelle la surface de guidage de machine (23) du corps de guidage de machine (22) est en appui ou peut être en appui.

4. Scie à main (10) selon l'une quelconque des revendications précédentes, **caractérisée en ce que** les moyens de fixation (60 ; 160 ; 260) présentent au moins un logement d'emboîtement (61) pour l'emboîtement du corps de guidage de machine (22) et/ou au moins une saillie d'emboîtement (64A, 64B, 67) pour l'emboîtement dans un logement d'emboîtement de machine (28) le long d'une voie d'emboîtement (SB1), en particulier d'un axe d'emboîtement.

5. Scie à main (10) selon la revendication 4, **caractérisée en ce que** l'au moins un logement d'emboîtement (61) est conçu à la façon d'une poche de réception et/ou est conçu pour la réception d'une partie de bord (24) du corps de guidage de machine (22), dans laquelle la partie de bord (24) présente une portion de la surface de guidage de machine (23) ainsi qu'une face frontale (24A) du corps de guidage de machine (22) angulaire par rapport à la surface de guidage de machine (23), et/ou que des moyens d'encliquetage (66 ; 266), en particulier des crochets d'encliquetage, pour s'encliqueter avec le corps de guidage de machine (22), sont prévus sur le logement d'emboîtement (61) et/ou sur l'au moins une saillie d'emboîtement (64A, 65A, 67) et/ou que l'au moins une saillie d'emboîtement (64A, 65A, 67) est conçue comme un crochet d'encliquetage (67A) et/ou que l'au moins un logement d'emboîtement (61) est prévu pour l'emboîtement du corps de guidage de machine (22) dans une première direction d'emboîtement (SR1) et les moyens de fixation (60 ; 160 ; 260) présentent des moyens de fixation par emboîtement (74, 75) pour fixer le dispositif d'aspiration perpendiculairement à la première direction d'emboîtement (SR1), dans lequel il est avantageusement prévu que l'au moins une saillie d'emboîtement (64A, 65A, 67) forme les moyens de fixation d'emboîtement (74, 75) ou une portion de ceux-ci et soit conçue pour s'emboîter dans le logement d'emboîtement de machine (28) dans une deuxième direction d'emboîtement (SR2) ou voie courbe angulaire, en particulier à peu près à angle droit, par rapport à la première direction d'emboîtement (SR1).

6. Scie à main (10) selon l'une quelconque des revendications précédentes, **caractérisée en ce que** les moyens de fixation (60 ; 160 ; 260) présentent un corps d'encliquetage, en particulier un crochet d'encliquetage, pour s'encliqueter avec le corps de guidage de machine (22) et au moins un corps d'appui (64, 65) pour fixer par coopération de formes et/ou servir d'appui au dispositif d'aspiration (30 ; 130 ; 230) sur le corps de guidage de machine (22) par rapport à un mouvement de libération pour libérer le corps d'encliquetage d'une prise d'encliquetage avec le corps de guidage de machine (22) et/ou un mouvement de fixation du corps d'encliquetage pour l'encliquetage du dispositif d'aspiration (30 ; 130 ; 230) avec le corps de guidage de machine (22), dans lequel il est avantageusement prévu que le corps d'encliquetage et l'au moins un corps d'appui (64, 65) soient disposés directement l'un à côté de l'autre et/ou que les deux soient conçus pour s'insérer ensemble dans un logement d'emboîtement de machine (28) du corps de guidage de machine (22).

7. Scie à main (10) selon l'une quelconque des revendications précédentes, **caractérisée en ce que** le dispositif d'aspiration (30 ; 130 ; 230) présente au moins une paroi latérale (44) dont le côté court ou côté frontal forme le contour de guidage (55 ; 155 ; 255) ou une partie intégrante du contour de guidage (55 ; 155 ; 255).

8. Scie à main (10) selon l'une quelconque des revendications précédentes, **caractérisée en ce que** le dispositif d'aspiration (30 ; 130 ; 230) présente au moins deux parois latérales (44) espacées l'une de l'autre, dans laquelle l'espacement est conçu et prévu pour le logement de l'outil de sciage (15) et/ou forme un élément constitutif d'un canal d'écoulement (52) menant au raccord d'aspiration (31), et/ou que le contour de guidage (55 ; 155 ; 255) présente une forme en U.

9. Scie à main (10) selon l'une quelconque des revendications précédentes, **caractérisée en ce qu'**au moins une portion du contour de guidage (55 ; 155 ; 255) est disposée sur un élément de guidage (156), lequel est fixé ou peut être fixé de manière détachable sur un corps de base (40 ; 140 ; 240) du dispositif d'aspiration (30 ; 130 ; 230), et/ou que le raccord d'aspiration (31) présente une tubulure de raccordement (32) qui est conçue pour l'accrochage d'un flexible d'aspiration (91) et est montée de manière rotative par rapport à un corps de base (40 ; 140 ; 240) du dispositif d'aspiration prévu et conçu pour la liaison au corps de guidage de machine (22).

10. Scie à main (10) selon l'une quelconque des revendications précédentes, **caractérisée en ce que** le dispositif d'aspiration (30 ; 130 ; 230) présente un canal d'écoulement (52) qui s'étend entre une zone de réception pour l'outil de sciage (15) et le raccord d'aspiration (31), dans laquelle le canal d'écoulement (52) s'étend le long de la surface de guidage de machine (23) et/ou sur un côté du corps de guidage de machine (22) détourné du carter de machine (17) lorsque le dispositif d'aspiration (30) est fixé à la scie à main (10).

11. Scie à main (10) selon l'une quelconque des revendications précédentes, **caractérisée en ce que** le dispositif d'aspiration (30 ; 130 ; 230) est constitué en tout ou en partie de matière plastique en particulier renforcée de fibres et/ou que le dispositif d'aspiration (30 ; 130 ; 230) est constitué d'un matériau autre que le corps de guidage de machine, dans laquelle il est avantageusement prévu que le dispositif d'aspiration (30 ; 130 ; 230) soit constitué en tout ou en partie de copolymère polycarbonate-acrylonitrile-butadiène-styrène (PC-ABS) et/ou polyoxyméthylène (POM) et/ou polyamide, en particulier polyamide renforcé de fibres de verre, en particulier de PA6GFx, dans laquelle x représente un pourcentage de fibres de verre et est en particulier compris entre 5 et 50.

12. Scie à main (10) selon l'une quelconque des revendications précédentes, **caractérisée en ce que** le contour de guidage (55), en particulier dans une zone prévue pour l'outil de sciage (15), sous-tend un plan de guidage (FF) ou se situe dans un plan de guidage (FF), et qu'un axe longitudinal (LA) du raccord d'aspiration (31) s'étend à un angle (WI) par rapport au plan de guidage (FF), dans laquelle il est prévu avantageusement que l'angle (WI) soit compris entre 15° et 85°, en particulier entre 30° et 80°.

13. Scie à main (10) selon l'une quelconque des revendications précédentes, **caractérisée en ce que** le raccord d'aspiration (31) est monté de manière à pouvoir pivoter autour d'au moins un axe de pivotement (S1, S2) par rapport à un corps de base (40) présentant le contour de guidage (55) au moyen d'au moins un palier pivotant (280).

14. Scie à main (10) selon l'une quelconque des revendications précédentes, **caractérisée en ce qu'**au moins un logement pour les moyens de fixation (60 ; 160 ; 260) du dispositif d'aspiration (30) est disposé sur la surface de guidage de machine (23) du corps de guidage de machine (22), en particulier au moins un logement à liaison par coopération de formes pour le maintien par coopération de formes et/ou la réception de moyens de maintien par coopération de formes (63 ; 163 ; 263) du dispositif d'aspiration (30) et/ou au moins un logement d'emboîtement de machine (28) pour l'emboîtement d'un corps d'emboîtement ou corps d'appui (64, 65) du dispositif d'aspiration (30) et/ou au moins un logement d'encliquetage pour l'encliquetage d'une saillie d'encliquetage (67) des moyens de fixation (60 ; 160 ; 260).

15. Scie à main (10) selon l'une quelconque des revendications précédentes, **caractérisée en ce que** le corps de guidage de machine (22) est monté de manière mobile sur le carter de machine (17) au moyen d'un dispositif de palier (21V), en particulier d'un palier coulissant, de sorte que la surface de guidage de machine (23) soit mobile entre au moins deux positions relatives différentes l'une de l'autre par rapport au carter de machine (17), et/ou que le carter de machine (17) présente une forme de pistolet et/ou la surface de guidage de machine (23) est plus courte qu'une extension longitudinale maximale du carter de machine (17) et/ou le moteur d'entraînement (11) est traversé par un axe longitudinal de l'outil de sciage (15) et/ou le moteur d'entraînement (11) est coaxial par rapport à l'outil de sciage (15) et/ou au logement d'outil (14).
